Europäisches Patentamt

European Patent Office

Office européen des brevets

(11) Publication number: **0 451 485 A2**

# EUROPEAN PATENT APPLICATION

(21) Application number: 91103021.1

(22) Date of filing: 28.02.91

(51) Int. Cl.⁵: **G06F 15/20**

(30) Priority: **11.04.90 US 508038**

(43) Date of publication of application:
**16.10.91 Bulletin 91/42**

(84) Designated Contracting States:
**DE FR GB IT**

(71) Applicant: **INTERNATIONAL BUSINESS MACHINES CORPORATION**

**Armonk, NY 10504(US)**

(72) Inventor: **Chang, Ifay Fay**
**359 Louis Drive**
**Katonah, New York 10536(US)**
Inventor: **Fan, Ting-Jun**
**One Beecher Lane**
**Peekskill, New York 10566(US)**
Inventor: **Huang, Kwan Tsae**
**2308 Brookside Avenue**
**Yorktown Heights, New York 10598(US)**
Inventor: **Machlin, Rona Susan**
**44 Morningside Drive**
**Croton-on-Hudson, Wew York 10520(US)**
Inventor: **Wang, Christopher Pin-Chen**
**2308 Brookside Avenue**
**Yorktown Heights, New York 10598(US)**

(74) Representative: **Jost, Ottokarl, Dipl.-Ing.**
**IBM Deutschland GmbH Patentwesen und**
**Urheberrecht Schönaicher Strasse 220**
**W-7030 Böblingen(DE)**

(54) **A form authoring toolkit.**

(57) A form authoring toolkit (34) for on screen form design and filling on an interactive display. A user-friendly interface allows non-programmers to design and process electronic and paper forms. The toolkit is separated into two modes, a designer mode (46) which lets a designer create on-screen forms (50), and a user mode (48) which lets a user fill information in corresponding form entries on the interactive display.

FIG. 3

1. Technical Field

The invention is in the field of electronic office processing, and specifically is directed to on screen form design and filling on an interactive display.

2. Background Art

Forms have been widely used in many places. A well-designed form should be easy to fill in, read, process, store, and distribute. Furthermore, the filling instructions should be clearly described and well placed so that users can easily understand and follow them. With the help of a computer, electronic (on screen) forms have many advantages over traditional paper forms. Firstly, filling instructions can be clearly displayed and prompted on demand. By pressing a help key, for example, relevant illustrations can be brought up without manual searching through information resources which are usually mixed with other entries in hardcopy paper forms. Secondly, the filling process will be more efficient. Most hardcopy forms have a few fields whose values usually come from long calculation (e.g., the total price of a purchase order). This calculation is, under most circumstances, the bottleneck of form-filling process. The efficiency can be improved by using electronic forms since many derived form fields can be manipulated by the computer rather than by the user. Thirdly, error detection can be achieved during editing time. When a constraint is violated, the user is informed immediately. Finally, the forms, either blank or filled, can be efficiently distributed through electronic networks.

To provide the above capability, tools for form design and form filling are both required. The form design tool lets a designer create on-screen forms while the form filling tool lets a user fill information in corresponding form entries. In designing a form, the tool should be able to provide enough facilities to let the designer create various fields, arrange layouts on screen, duplicate and imitate existing paper form, specify actions such as the help instructions, etc. After a form has been created, it will be distributed to various users. The user then uses the form filling tool to bring up the designed form, fill in information, and save the filled form. These two tools should be closely related to each other because many of the functions such as displaying the created fields can be quite similar; however, they have to be completely independent because they serve two different kinds of users. In fact, the form design tool should contain the form filling tool because the designer, in order to test the form being created, should be able to do all the things that a form filling user is allowed to. Therefore, a good form design tool should allow the designer to switch back and forth between the designer mode, in which he is allowed to do things that are not permitted in the form filling tool, such as deleting a created field, changing the color of a field, or moving a field around the screen, and the user mode, in which the designer acts as if he were a form filling user.

The prior art has not taught how to design a form on screen or how to switch between a designer mode and a user mode. Typical of the prior art approach is U.S. Patent 4,542,378 to Suganuma et al which discloses a document processing method wherein blank forms are read by an image input device, and the format thereof is stored in a memory. Additional information for filling in the form is input in the same manner, and the information is electronically overlaid using a control device for the memory, so that a completed form is stored in the memory for output by a printing device. In Suganuma et al., once the blank form is input to the device, further blank forms are unnecessary.

Another prior art approach is set forth in U.S. Patent 4,730,252 to Bradshaw which discloses a document preparation program for use in connection with a word processing facility which includes a succinct identification and listing of designated parts of a memorandum or document, each unique part having access to an associated file which contains the basic text and formatting controls for that particular part. The user of the program may readily assemble a document from the parts inventory displayed on a master screen by mere cursor reference or by keying the name of designated parts and have the newly created document displayed or printed in most cases without reference to additional screens.

A further prior art approach is described in U.S. patent 4,809,220 to Carlson et al which discloses a form processing system in which a form can be designed only from a pre-printed form which consists of lines and texts. The output is a form consisting of only blank lines with texture captions, each blank line represents an input field. After the form is designed, a user can fill out information only on those input fields. The positioning of lines, texts, and information is controlled by keyboards and displayed cursors.

PerFORM, which is described in a book entitled "PerFORM: For All Forms of Business", Delrina Technology Inc., March 1989, is an electronic business form processor for IBM PC, XT, AT, PS/2 or compatibles under the DOS operating system. It is easy to learn and easy to use and is based on a What You See is What You Get (WYSIWYG) interface. It provides a form design tool and a form filling tool. PerFORM provides a program-free environment for the designer to design forms using a mouse or keyboard, and also allows people to scan existing forms and trace them on the screen. In the form filling tool, PerFORM provides data entry validation including numeric check and range selection (which have to be specified in the form design tool), context sensitive help, automatic date and time stamp, and automatic calculation from other fields. PerFORM has been a product since early 1989. However, PerFORM does not provide enough features for a sophisticated form design. Most importantly, the number of objects that can be created by PerFORM is very limited. For example, PerFORM does not have a "table" object which is supplied by the toolkit of the present invention. Such a table is very commonly used in most of the existing forms today. A table usually contains rows and columns so that the user can fill in data in each table entry, or the intersection of each row and column. In the toolkit of the invention, such a table can be created in seconds.

However, in PerFORM, it involves tremendous amounts of effort to create and maintain such tables. Since PerFORM does not supply "table", a table has to be combined by many objects such as frames, entry fields, lines, etc.

Furthermore, PerFORM is black and white and has very limited image capabilities. And, because it runs on DOS, multiprocessing is impossible.

InterView, which is described in an article entitled "Composing User Interfaces With Interviews", IEEE Computer, 22(2) 8-22, February 1989, is a toolkit developed in Stanford University that offers a rich set of composition mechanisms and a variety of predefined objects, allowing easy implementation of complex user interfaces. It consists of three components: Interactor composition, which manages some area of potential input and output on a workstation display such as tiling, overlapping, stacking, and encapsulation of object components, Graphic composition, which provides a direct manipulation editor that allows the designer to directly manipulate graphical representations of familiar objects, and Text composition, which allows the designer to directly manipulate text objects and textual interfaces. InterView is a general application developing toolkit which is not restricted only to form design.

HyperCard, which is described in a book entitled "The Complete Hypercard Handbook" by Danny Goodman, Bantam Books, Inc., N.Y., N.Y., 1987, is a user interface authoring system implemented on Macintosh. It provides a large variety of dialog-based objects such as checkboxes, listboxes, and radio buttons for the designer to design his/her own application. HyperCard also supports linking mechanism which allows the designer to specify relations among objects. HyperCard is also supported by HyperTalk, a language which allows the designer to specify actions associated with the chosen object. Similar to InterView, HyperCard is a general purpose authoring tool which is not restricted only to form design.

There are many other areas of research related to form design. In general, a general purpose user interface design tool such as InterView and Hyper-Card is not restricted to form design, therefore, many of the special fields such as an editable table or a multi-line entry fields which are very useful for form design are not included. Furthermore, the capabilities for form filling support such as automatic computation, validation checking, and on-line help are not supplied. Functions such as retrieving forms, storing forms, and switching between form design and form filling modes are also missing.

According to the present invention, form design, as well as many other graphical user interface applications, is made easier and more efficient as the designer can immediately view what he has created and modify it interactively. In order to achieve this, the form design tool takes advantage of workstation displays and window interfaces rather than using conventional line-coded programming. In a window-driven environment, the designer can communicate with the underlining program through a mouse and keyboard. The created fields are displayed immediately on screen and the designer can move, resize, or rotate them as desired without the need to know the exact attribute values associated with these fields. The form can also be easily modified interactively by the designer without changes of any piece of the program code.

## DISCLOSURE OF THE INVENTION

A form authoring toolkit is described for on screen form design and filling on an interactive display, which provides a user-friendly authoring environment which allows non-programmers to design and process electronic and paper forms. The toolkit is separated in two modes: A designer mode lets a designer create on-screen forms while a user mode lets a user fill information in corresponding form entries.

## BRIEF DESCRIPTION OF THE DRAWINGS

FIG. 1
is a block diagram of a computing system and interactive display which may be utilized in the practice of the invention;
FIG. 2
is a block diagrams of the form authoring and filling process;
FIG. 3
is a block diagram of the system utilized in the form authoring and filling process;

FIG. 4
illustrates typical graphic objects utilized in the form authoring and filling process;
FIG. 5
illustrates a typical form created by the form authoring process of the invention;
FIG. 6
illustrates the main window presented on the interactive display by the form authoring process;
FIGS. 7, 8 and 9
illustrate how an object is created on the screen of an interactive display;
FIG. 10
illustrates how an object is moved on the screen of the interactive display;
FIG. 11
illustrates how an object is rotated on the screen of the interactive display;
FIG. 12
illustrates how an object is resized on the screen of the interactive display;
FIG. 13
illustrates how text is reformatted according to the invention;
FIG. 14
illustrates how a formula is edited according to the invention;
FIGS. 15,16,17 an 18
illustrate how table column order is changed according to the invention;
FIG. 19
illustrates how a table is resized according to the invention;
FIG. 20
illustrates a form created from a scanned-in paper form image;
FIG. 21
is a flow chart of the top level loops of the form authoring and filling process;
FIG. 22
is a flow chart for the function MAIN of the form authoring and filling process;
FIG. 23
is a flow chart of object creation functions;
FIG. 24
is a flow chart of the editing functions;
FIG. 25
is a flow chart of the resizing and rotating functions;
FIG. 26
is a flow chart of input/output functions;
FIG. 27
is a flow chart of coloring functions;
FIG. 28
is a flow chart of printing functions;
FIG. 29
is a flow chart of the ENTRY function;

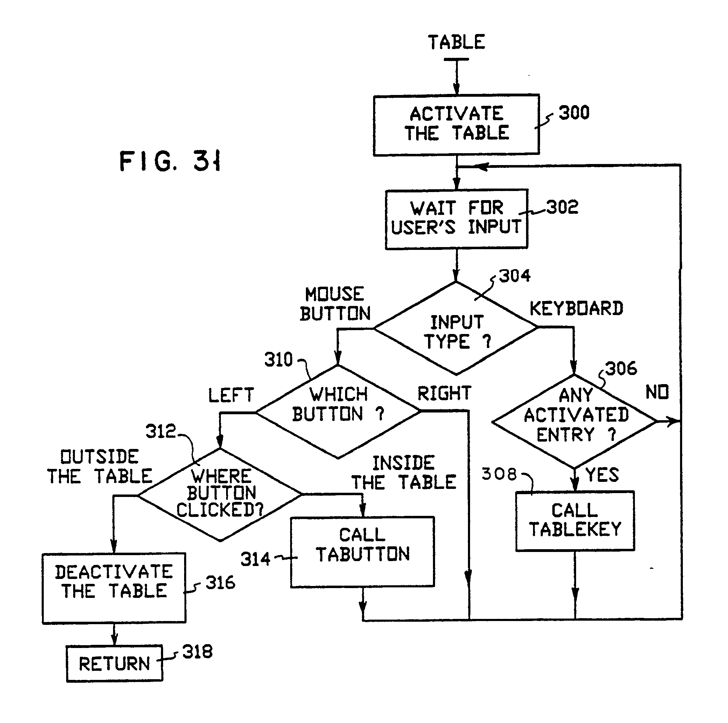

FIG. 30
is a flow chart of the ENTRYKEY function;
FIG. 31
is a flow chart of the TABLE function;
FIG. 32
is a flow chart of the TABUTTON function;
FIG. 33
is a table useful in the understanding of the flow chart of FIG. 31; and
FIG. 34
is a flow chart of the TABLEKEY function.

## BEST MODE OF CARRYING OUT THE INVENTION

A form authoring toolkit is described for on screen form design and filling on an interactive display. The toolkit is useful for general purpose form creation such as medical forms and the like, and can also be used as a graphic editor and can provide very high quality graphic output.

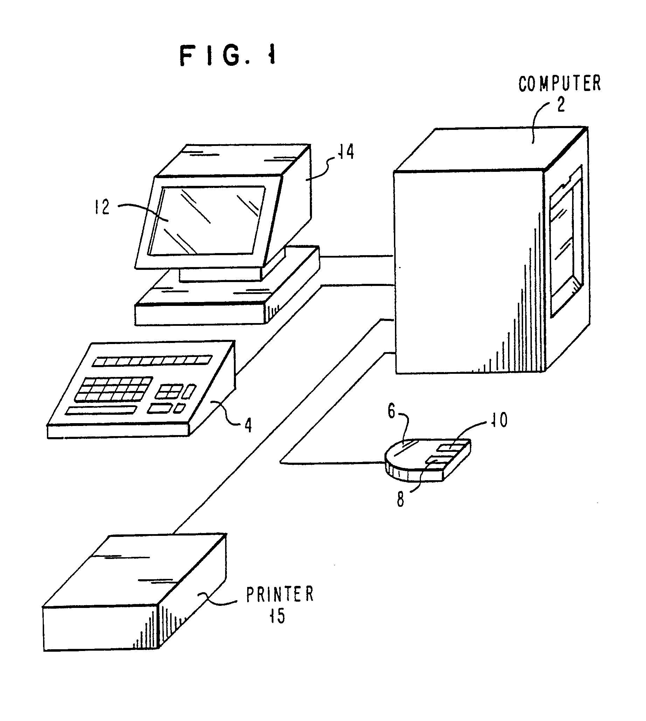

The invention may be practiced on a computing system and interactive display as shown in Fig 1. For purposes of description, the computing system 2 is shown as a IBM Personal System/2 (PS/2) Computer. Personal System/2 and PS/2 are each registered trademarks of IBM Corporation. The operation of the PS/2 is described in "PS/2 Hardware Interface Technical Reference", IBM Publication order number 68X-2330-0. The PS/2 responds to inputs from an input device such as a Keyboard 4 and mouse 6, via left button 8 and right button 10, to design and fill a form on the screen 12 of an interactive display 14 with the form being printed on a printer 15, as set forth below.

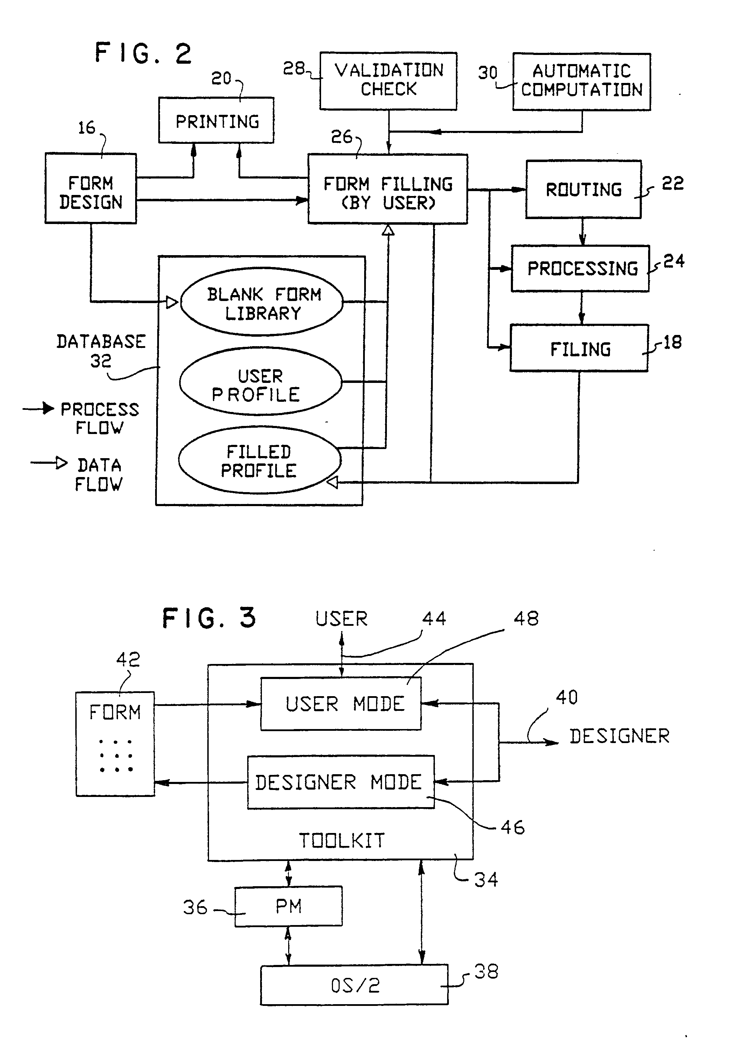

The entire form process may include many different steps. The purpose of the toolkit is to provide major components which include form design, filling, retrieving, storing, and printing. Fig. 2 shows the role of the toolkit in the entire form process:

1. Form design in block 16: on screen design on user-friendly environment.

2. Form storing and filing in block 18: database supporting form storing and retrieving.

3. Printing in block 20: different size printing.

4. Requesting & distribution through a network in blocks 22 and 24.

5. Form filling in block 26: on screen filling supported by:

a. Validation check in block 28: automatic checking on input fields.

b. Computation in block 30: automatic computation on field data.

c. User profile supporting block 32: automatic retrieving user information from database.

In order to maintain the generality of the toolkit and easy extension for its future development, it is designed based on an object-oriented approach. Each feature in the toolkit is represented by an object, these objects include graphic objects, bitmaps, active objects, entry fields, tables, etc. Each object type is supported by its own methods. The methods are standard operations to create, delete, copy, rotate, resize, store, retrieve, and change the attributes of those objects with corresponding object types.

The toolkit is separated into two parts: An application independent part, which includes the definition of the object type and its corresponding methods, and an application dependent part, which includes special routines for specific applications such as form design. With such separation, it is very easy to develop other applications with minimal effort. One can decide to keep the application independent portion and rewrite the application dependent part to satisfy the new application. One is also allowed to add, delete, or modify any object type and its corresponding methods. In fact, the application independent part contains about 80% of the toolkit's program code. This indicates that it may save as much as 4/5 of the work when one needs to design a new application.

The purpose of implementing the toolkit is twofold: Firstly to design a toolkit specially for form design and then extend it to a more general purpose user interface authoring system. The reason is that it is believed it will be easier to start from a smaller set of applications such as the form design rather than trying to implement everything. Therefore, the toolkit contains not only special form design features, but also leaves room for more general mechanism, in other words, generality is always seriously considered throughout the development of the toolkit.

Refer now to Fig. 3. in which the toolkit 34 is implemented with Presentation Manager (PM) 36 and Operating System/2 (OS/2) 38 and operable on PS/2 model 60 or above with a VGA or BGA port. The operation of the OS/2 is described in the "IBM Operating System/2 Extended Edition User's Guide", IBM Publication order number 90X7658. The operation of the Presentation Manager is described in the "IBM Operating System/2 Programmer's Toolkit", IBM publication order number Z125-3301-02 4/87. Operating system/2 is a registered trademark of IBM Corporation. It is a stand-alone program requiring no pre-installation to run. The toolkit 34 serves as a user interface between the window system PM 36 and the form designer 40. A form 42 generated by the toolkit 34 is itself an application which is also a user interface between PM 36 and the one, the designer 40 or user 44, who fills in form 42.

The toolkit 34 contains two modes: a designer mode 46, which lets the designer create on-screen forms, and a user mode 48, which lets the user fill in information in the designed form. The user mode 48 also allows the designer 40 to test the form being designed. The designer 40 is free to switch between these two modes; however, the form end user 44 is allowed only in the user mode 48. The distinction between a designer 40 and a user 44 is determined when the program is distributed, i.e., there will be two versions for the toolkit, one for the designer 40, which includes both modes, and the other for the user 44, which includes the user mode 48 only.

Objects and forms are as discussed below. In the toolkit, a form is a combination of various objects. Each object contains different properties and provides different functionalities. One can start designing forms by creating those objects in the designer mode. Each created object can then be treated independently and can be modified any time during the design process. The designed form can be stored, retrieved, modified, printed, or filled by a user in the user mode.

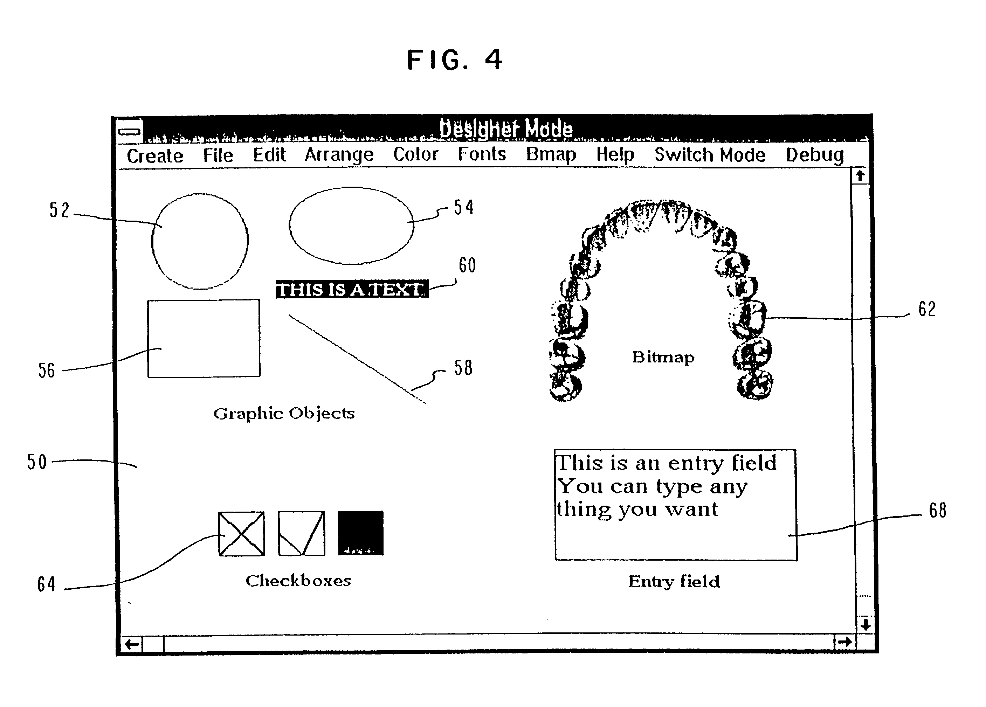

The toolkit provides six types of objects described below. Fig. 4 shows several examples on a screen 50.

Graphic Objects: These include circles 52, ellipses 54, rectangles 56, triangles, lines 58, and texts 60.

Bitmaps: Bitmaps 62 are also called images. They can either be loaded from existing files or created on screen. These include scanned images, graphic images, and logos.

Checkboxes: The user is allowed to check or uncheck a checkbox 64 in the user mode by clicking a mouse button at it.

Entry Fields: An entry field 68 serves as a small text editor which allows the user to fill information in. The toolkit also provides full support for automatic validation checking and computation for entry field data. It will be discussed in more detail later.

Tables: Tables are specially provided to expedite form design. A table is a combination of entry fields that can be moved, resized, deleted, or added in full rows or columns. Tables will be discussed in more details later.

Barcodes.

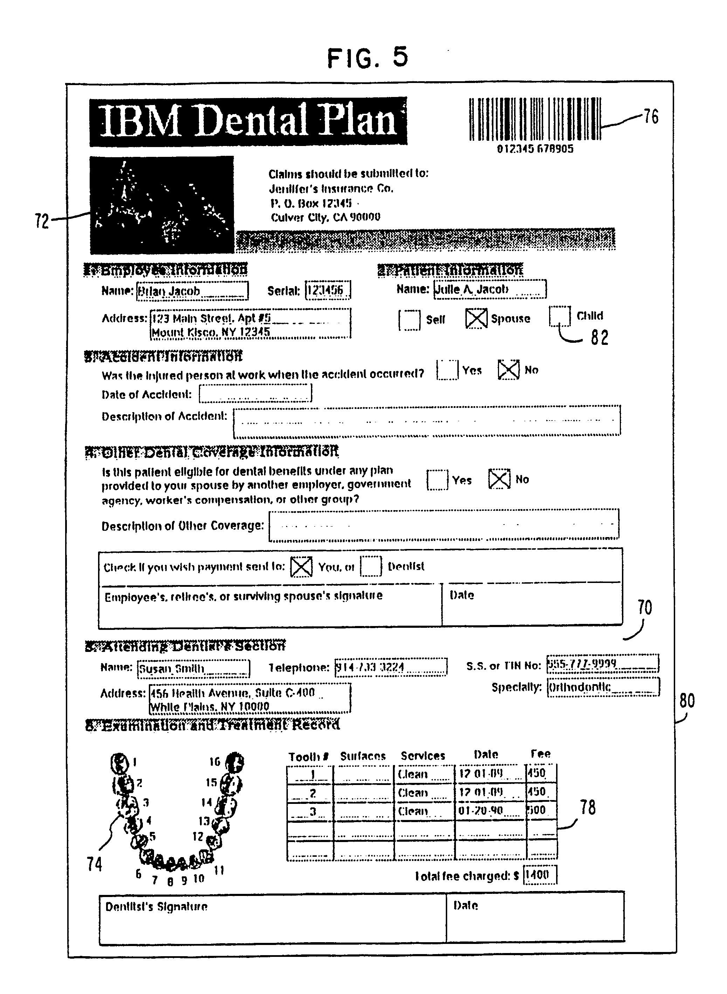

Fig. 5 shows a typical form 70 as created by the toolkit. It should be noted that this form can be created in full color and can be displayed on a color monitor and printed on a color printer. The form contains two bitmaps, one showing a picture of fruits 72 and the other showing a teeth image 74. It also contains a barcode 76, a table 78, a big boundary rectangle 80 and several other smaller ones. It also contains 11 checkboxes 82 such that a user can check/uncheck any of them by clicking a mouse button on top of it. There are many lines of texts showing different fonts and background colors. The form also contains many entry fields that a user can fill information in by clicking a mouse button on one of them and typing characters through the keyboard. Some of the entry fields such as the "Serial" and the "Date of Accident" are assigned by particular types that automatic validation check is performed each time their contents are changed by the user. The entry field prefixed by "Total fee charged" in the bottom of the form is specified by a numerical formula. This formula specification will automatically sum up the contents of the last column of the table, i.e., the entries titled "Fee", and place the result into that entry field.

The toolkit provides a completely programming-free and What You See Is What You Get (WYSIWYG) environment that one can create and fill a form efficiently and correctly on screen. It contains a main window that allows users to manipulate everything on it, with support of menus, dialogs, and handy object manipulations for easy user interactions.

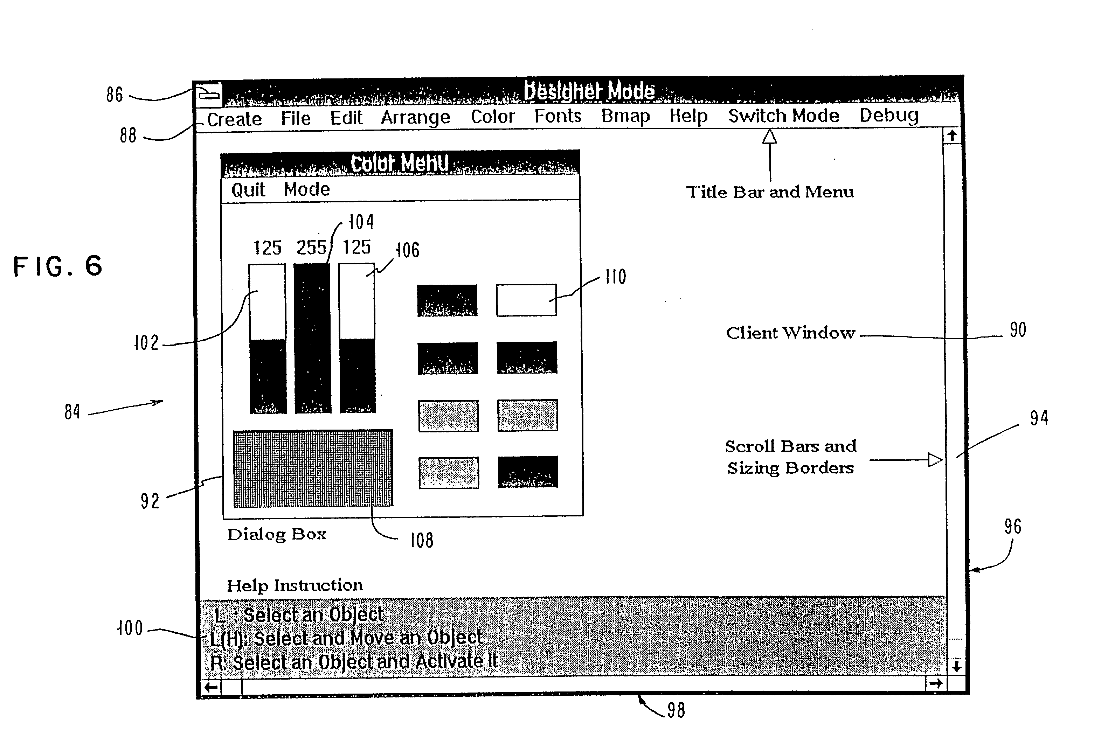

The main window 84, as shown in Fig. 6 includes the following components:

Title bar 86: This is shown on top of the window. The title bar displays the current mode. One can move the main window by clicking the mouse button at the title bar and dragging the window to the desired location.

Menu 88: This is shown right under the title bar. The menu consists of several menu bars (e.g., "Create", "File", etc.) each of them contains a set of menu items (e.g. "Save File", "Rotate", etc.). The designer/user issues a command by selecting correspondent menu items.

Client window 90: This is the main body of the window. The client window displays graphic and textual objects. It also allows the user to manipulate objects directly through a mouse and keyboard.

Dialog box 92: One example is shown in the client window, it provides the user another way to select operations other than using menus. The example given is the dialog box for choosing colors.

Scroll bars 94: These are shown in the bottom and right of the main window. It allows the user to scroll the client window horizontally and vertically.

Sizing borders 96 and 98: These are the borders surrounding the main window. The user can resize the main window by moving the mouse around the sizing borders until the mouse pointer changes from

$$\text{R} \quad to \iff ,$$

and then clicking and dragging the highlighted borders until desired size is obtained.

Help message 100: This is shown at the bottom part of the client window in which step-by-step instructions are displayed. As the designer/user progresses, the messages are updated automatically to instruct him/her for further operations. One who is familiar with the system may choose to turn off the help message.

Acceleration keys: These are not shown in the figure. An acceleration key on the keyboard allows the user to invoke certain actions by hitting a single key. For example, the user can terminate the program by directly hitting a PF3 key.

The menu and dialog is as follows. Displayed on top of the main window is the name of each menu bar. Each menu bar consists of several menu items. A menu item, which is described by one or two simple words, provides an action, or a start of a sequence of actions, which can be invoked by selecting this menu item.

Some actions such as changing the background color of the client window require more than one step to accomplish. It needs not only a menu item selection, which invokes such actions, but also other information such as the desired color for the background. In this case, the dialog box 92 is usually a very useful tool.

Suppose one wants to change the background color of the client window (e.g., the background color of the form to be created). First select the "Background" item under the "Color" menu bar, the color menu dialog box 92 will then be displayed, as the one shown in

Fig. 6. The three vertical bars 102, 104 and 106 at the left portion of the dialog box 92 display current intensities in red, green, and blue of the background, and the box 108 under the color bars shows the actual color. The eight boxes such as 110 on the right display eight basic colors (white, red, green, blue, black, cyan, magenta, and yellow). One can select any of these colors by clicking at the corresponding boxes, the selected box will then be highlighted. One can also select any combination of red, green and blue values by clicking at any of the color bars and moving the mouse pointer up and down while still holding the mouse button (the height of the color bar will change accordingly). The vertical height of the color bar represents the relative value of that color component. The true intensity color value, between 0 and 255, is displayed on top of the color bar and is also changed instantly. In both cases (selecting basic colors or changing individual color values), the color box shows the resulting color in real time.

After the desired color is obtained, select "OK" under the "Quit" menu bar in the color dialog box (not in the main window), the color dialog box will then disappear and the background color of the client window will be changed. If one does not want to change the color, then select "Cancel" under the "Quit" menu bar, the original background color will remain intact.

Manipulating objects in the toolkit is very easy. Once an object is created, it acts like a solid object that one can drag it, shrink it, rotate it, cut it, or duplicate it with simple mouse and keyboard manipulations. The results of such actions are animated and displayed immediately on screen. The following lists several typical manipulations.

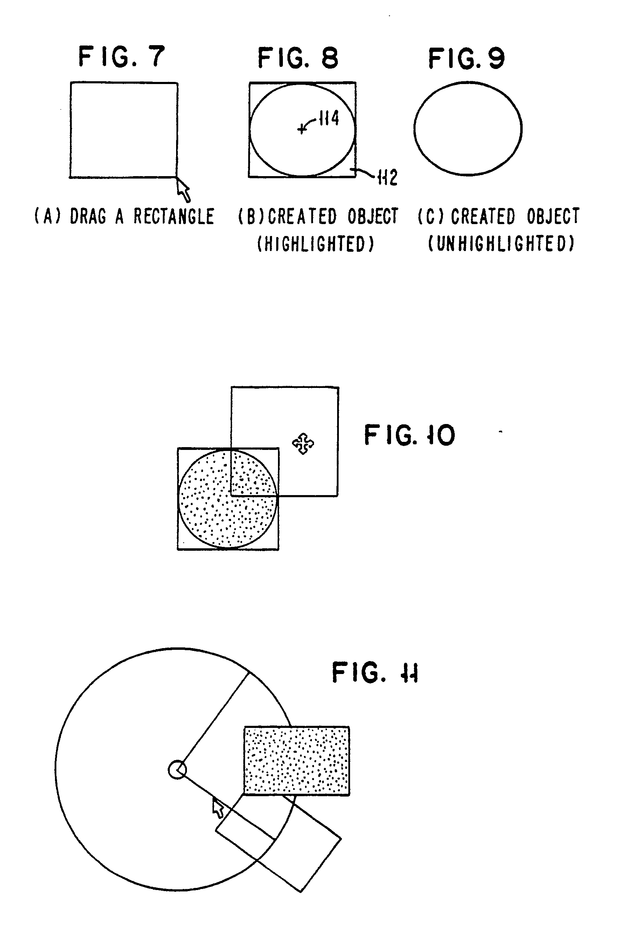

An object can be created very easily by selecting the corresponding menu item for the "Create" menu bar then followed by a sequence of mouse button actions. This is shown in Figs. 7 through 9. For example, to create an ellipse, one should follow the steps listed below:

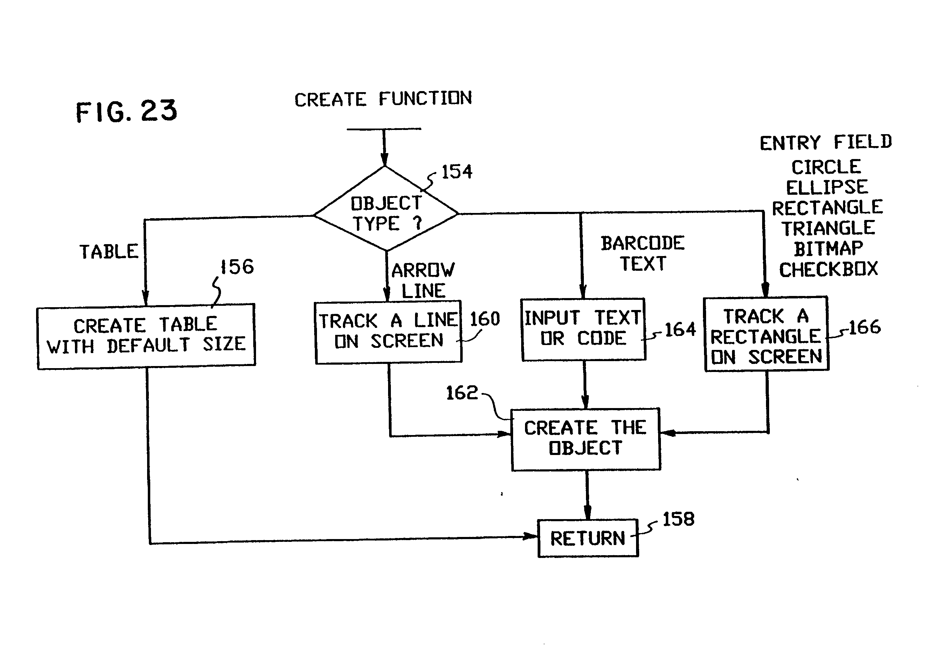

1. Select menu item "Ellipse" under "Create" menu bar. This is described in detail relative to the flow chart of Fig. 23.

2. Track a rectangle on the client window:

a. Push the left mouse button and hold it down.

b. Move the mouse to lower right, a tracking rectangle will then appear whose upper left corner is fixed and lower right corner moves with the mouse pointer.

c. Release mouse button, the tracking rectangle will disappear.

3. The ellipse will be created and enclosed by the tracking rectangle.

Dragging a rectangle is shown in Fig. 7. After the object is created in Fig. 8, it is highlighted by the rectangle 112 which encloses it and a small cross 114 which locates at the center of the object. The highlight indicates the newly created object is the currently selected object, or current object. The highlight can be removed by clicking at anywhere on the client window outside of the highlighted rectangle. The created object is then shown in Fig. 9. selecting and moving objects is as follows. This is described in detail relative to the flow chart of Fig. 22. An object can be selected as the current object by clicking at a point inside the bounding rectangle of this object. The bounding rectangle of an object is the smallest rectangle that encloses this object. The current object is always highlighted and can be moved, resized, edited, etc. To move an object, click at that object using the left mouse button and hold it down, the mouse pointer will be changed from

$$\text{\scriptsize $\nwarrow$} \quad to \quad \text{\scriptsize $\Leftrightarrow\!\!\!\!\;\updownarrow$} \quad ,$$

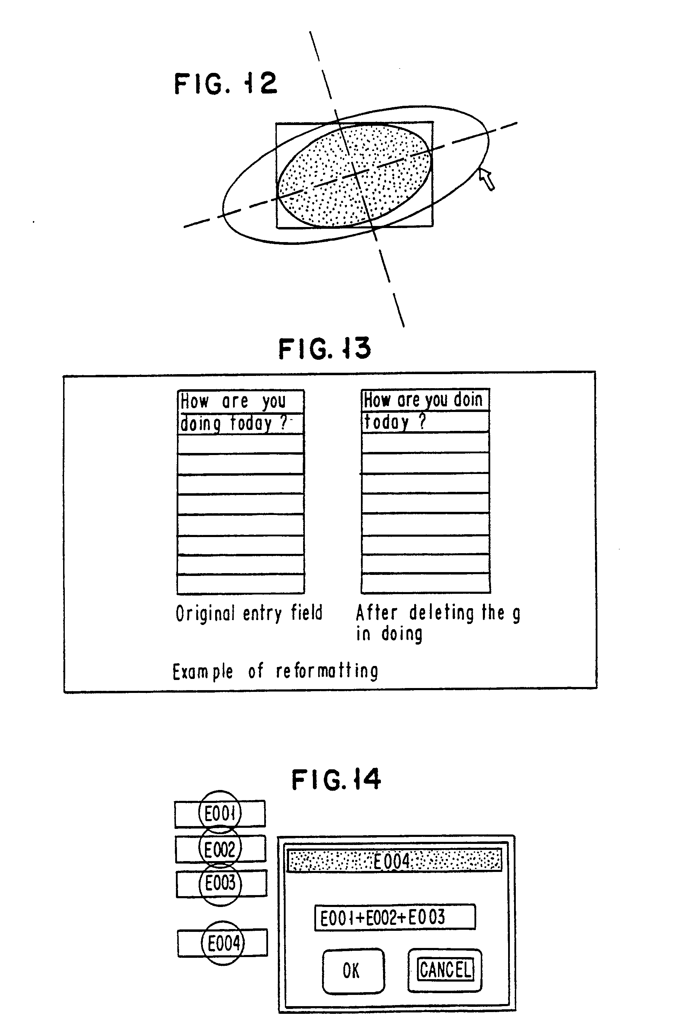

and a tracking rectangle will be displayed which encloses the selected object. Moving the mouse while still holding the button, the tracking rectangle will be moved accordingly, as shown in Fig. 10. By releasing the button, the object will be moved to the new location.

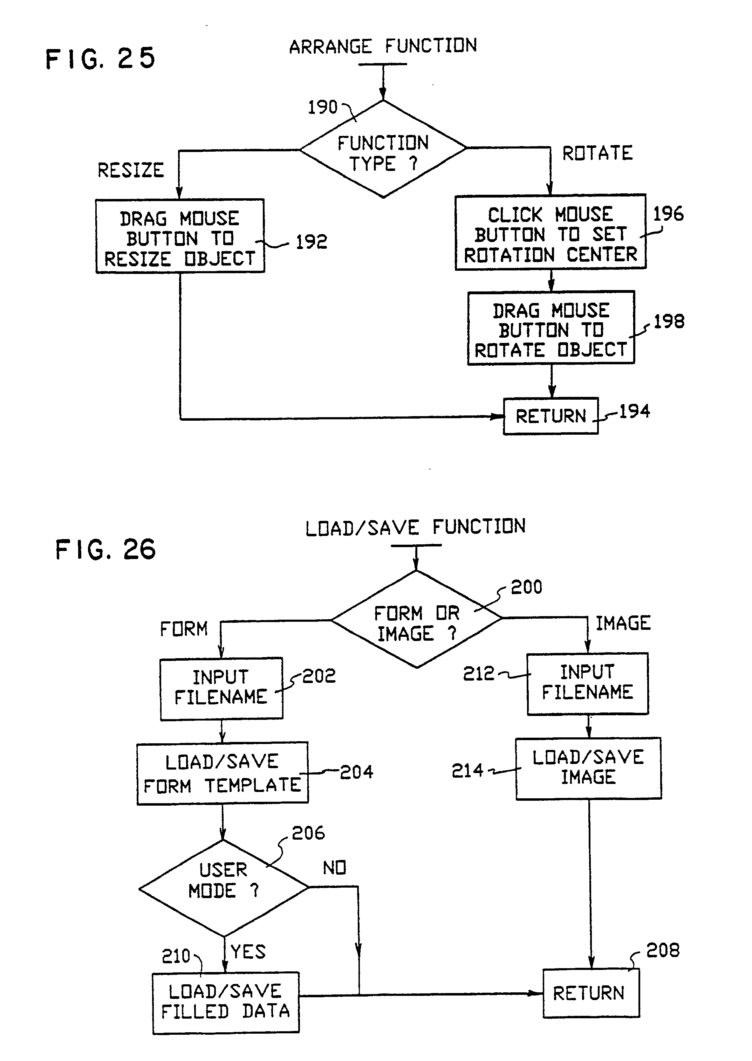

All the graphic objects except for texts can be rotated. To rotate an object, one should follow the steps listed below. This is described in detail relative to the flow chart of Fig. 25.

1. Select that object.

2. Choose the "Rotate" menu item under "Arrange" menu bar.

3. Click the left mouse button anywhere on the client window to specify the center point of the rotation; or click the right mouse button, in which case the center of the object will be chosen as the rotation center.

4. Two concentric circles will be displayed. Clicking and holding the left mouse button between the two circles and drag the mouse, the circles will revolve and the boundary of the object will be rotated accordingly, as shown in Fig. 11.

5. Release mouse button, the circles will disappear and the object will then be rotated accordingly.

To resize any object except a table, one should follow the steps below. This is described in detail relative to the flow chart of Fig. 25. Resizing a table is discussed later.

1. Select the object using left mouse button.

2. Choose "Resize" menu item under "Arrange" menu bar.

3. A pair of perpendicular dashed lines will be displayed. The lines intersect at the center of the object.

4. Click left mouse button at anywhere on the client window and hold the button down.

5. Move the mouse while holding the button, the boundary of the object will be resized and shown in animation, as shown in Fig. 12.

6. Release the mouse button, the object will then be resized accordingly.

The two dashed lines indicate the two major directions, namely horizontal and vertical (even it is rotated), of the object. In many cases, resizing in only one direction is expected. For example, in resizing a rectangle, one may want to change the length of the horizontal (top and bottom) boundaries and leave the vertical ones intact. To do this, in step 4 above, click somewhere close to the horizontal dashed line, and the object will only be resized in that direction. A line has only one direction and will be resized only in that direction, thus there is no dashed line displayed when resizing a line.

Grouping and ungrouping objects is as follows. One can move, rotate, copy, and change the display order of multiple objects simultaneously by grouping them first. The grouped objects will be treated as one single object. It will remain grouped until one ungroups them. This function allows one to create a family of objects and hierarchically link objects easily.

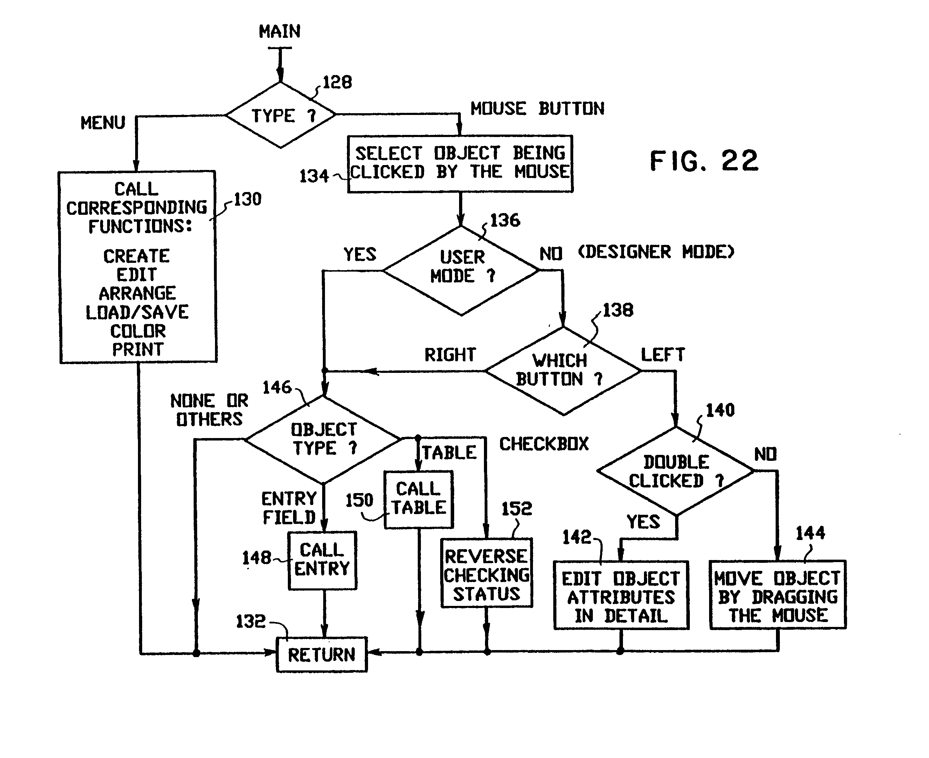

Other than using graphic editing, one can also modify the attributes of an object by using text mode editing. This is described in detail relative to the flow chart of Fig. 22. In text mode editing, the object attributes such as the location, orientation, color, and size can be modified by directly typing in the exact values. The advantage of the text editing is its accuracy, while the advantage of the graphic editing is its convenience.

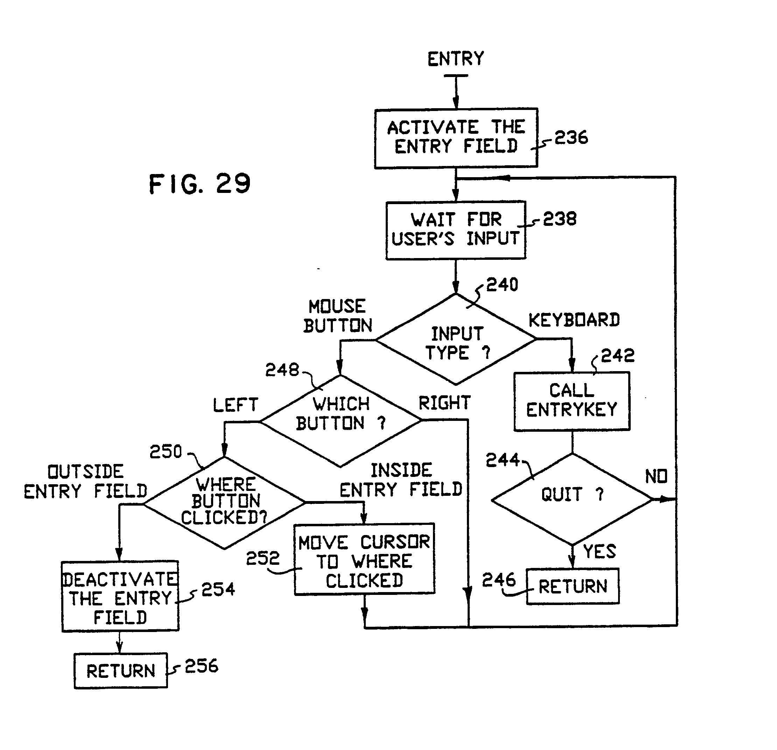

The Entry field, which is described in detail relative to the flow chart of Fig. 29, is as follows. The editing capabilities of the toolkit will now be discussed. A user activates an entry field by clicking a mouse button at it, a cursor will be displayed to show the current character position. An activated entry field is ready for the user to type information in. In the toolkit, entry fields are supported by strong editing capabilities which include formatting and reformatting on texts, validation checks, and automatic computation.

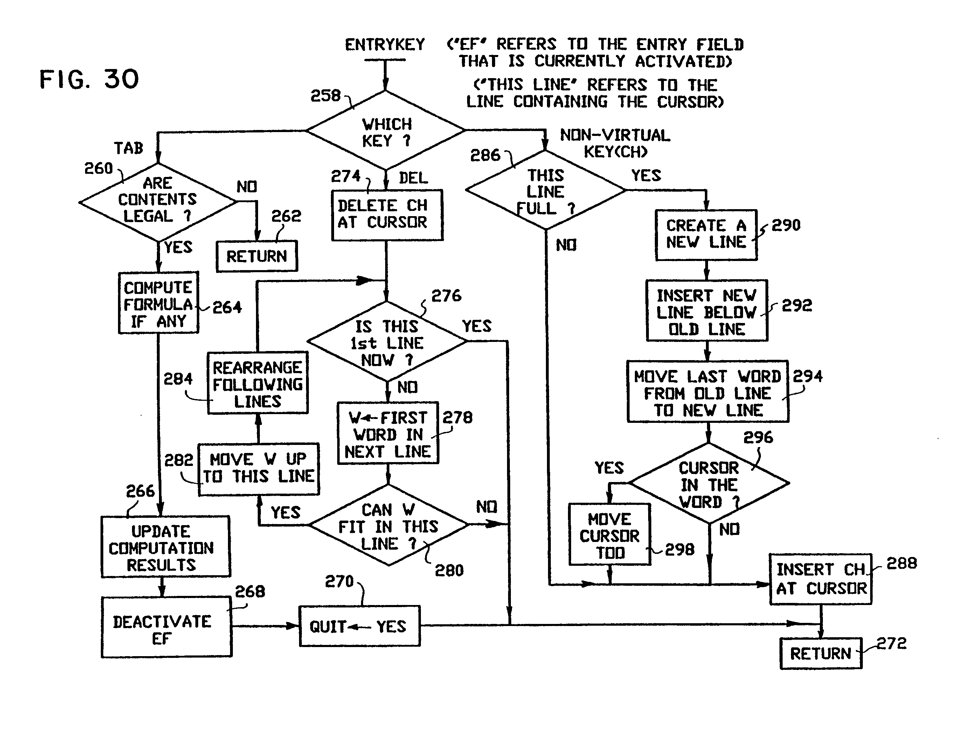

Formatting and reformatting, which is described in detail relative to Fig. 30, is as follows. The texts are not allowed to be outside of the entry field in the horizontal direction. The toolkit tries not to split a word over different lines when reformatting is necessary. Of course, this is not always possible because of the possibility of a word being longer than the window width.

When the texts in a line becomes longer than the entry field width, this line is split at word boundaries. That is, the line is truncated word by word from the last word until it fits in the window, and the truncated words are moved down to the next line. Then the next line is reformatted, then the line after, etc. When a character is deleted from the current line, the first word of the next line may now fit at the end of the current line. If so, this word is moved up to the end of the current line, then reformatting is propagated to following lines. However, if user hits an "Enter" key, a carriage return is inserted and it always enforces a new line.

One example of reformatting is shown in Fig. 13.

The toolkit provides automatic validation checks, which is described in detail relative to Fig. 30, for entry fields by allowing the designer to specify the entry field types. After a particular type is assigned to an entry field, the contents of the entry field will be automatically checked every time when the user finishes typing into that field. If the contents violate the defined type, the user will be warned and forced to go back to the entry field until he makes things right. Currently, the toolkit supports the following types:

Any String: No restriction for the contents of the entry field. This is the default.

Fixed Length String: The entry field contains a fixed length string.

Numeric Only: The entry field only contains a number.

Alphanumeric: The entry field only contains alphanumerics.

Date: The entry field only contains a string representing a valid date. The format of the date is very flexible. For example, to input a date indicating the 31st of October, 1989, one can type "October 31, 1989", "10-31-89", "Oct. 31 1989", "10/31/89", etc. Furthermore, valid month-date relationship and leap year are also checked. For example, the dates "02-30-89" and "02-29-89" are both illegal, but "02-29-88" is acceptable since 1988 was a leap year.

IBM Serial: The entry field only contains an IBM employee serial, which is a 6-digit number.

The toolkit also provides automatic computation, which is described in detail relative to Fig. 30, for entry fields by allowing the designer to specify an expression, or a formula, to a numeric entry field. The formula can be any numeric expression that contains numbers , operators ("+", "-", "*", "/", "(", and ")"), and symbolic names representing other entry fields. After a formula is assigned to an entry field, the contents of the entry field will be equal to the result of this formula. If the formula contains any symbolic name of another entry field, the result of the formula will be updated each time when the contents of that entry field is changed. And this result will then automatically replace the contents of the entry field associated with the formula.

For example, suppose four entry fields are created and placed from top to bottom and we want the contents of the entry field at the bottom to be the summation of other entry fields. To do this, we select that entry field and choose from the menu "Edit Formula". Each entry field on screen will be assigned a symbolic name, and each symbolic name will be displayed on top of its corresponding entry field, a dialog will also be displayed for inputting the formula, as shown in Fig. 14. In this case, "E004" represents the entry field at the bottom, and the string "E004 = " is shown on the title bar of the screen to indicate that the result of the formula will be placed into entry field "E004". Then, the formula is typed in the dialog box as shown in Fig. 14:

E001 + E002 + E003

As the result, whenever the contents of any other three entry fields are changed. The result is automatically computed and put into "E004".

If one types something illegal, for example, "E001 + G001" where "G001" does not exist, one will be prompted for correction. If any of the entry fields in the formula is not numeric, one will be warned and asked if they want to force it to be numeric. It should also be noted that, in the above example, "E004" can not appear in the formula.

One can delete a formula from an entry field by selecting "Delete Formula" under the "Entry Field" menu bar.

Creating a table, which is described in detail relative to Fig. 31, is different from creating other objects. When one chooses the menu item "Table" under the "Create" menu bar, a default table is created and placed at the center of the client window. The default table contains eight columns and six rows with default sizes. Each column contains a default column titles, a general title is also provided for the entire table. One can add or delete columns and rows, resize them, or change the titles. The order of the columns can also be changed, i.e., a whole column can be moved to somewhere else.

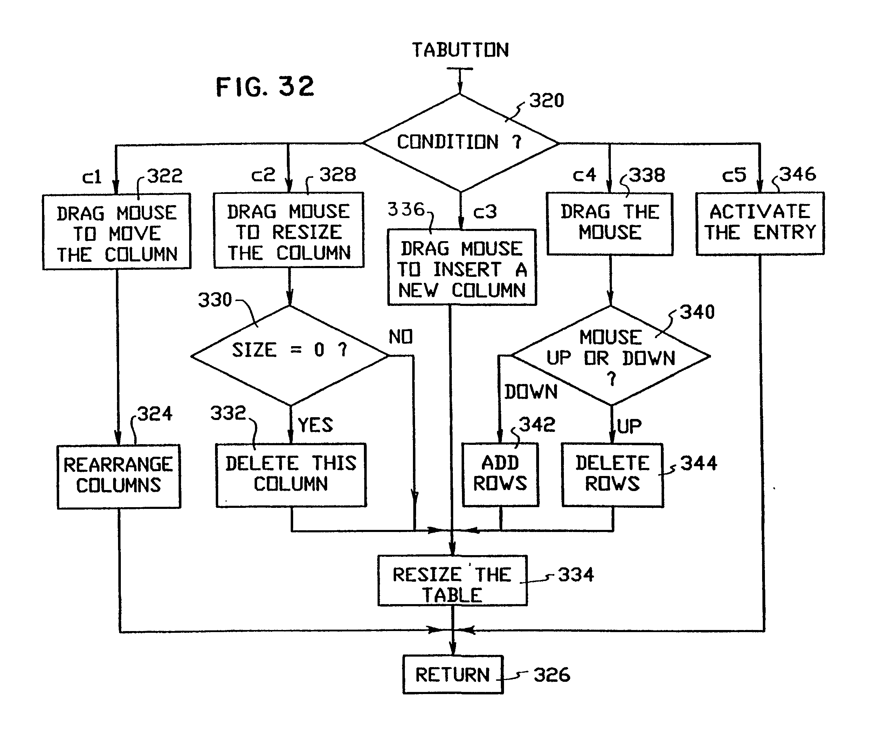

Reordering columns, which is described in detail relative to Figs. 31 and 32, is as follows. Suppose there is a four-columned table as shown in Fig. 15 and one wants to switch Column 2 and Column 3. To do this, the procedures listed below are followed:

1. Click the left mouse button between the double lines below the column title and hold down the button, a tracking rectangle of the whole column will then be displayed, as shown in Fig. 16.

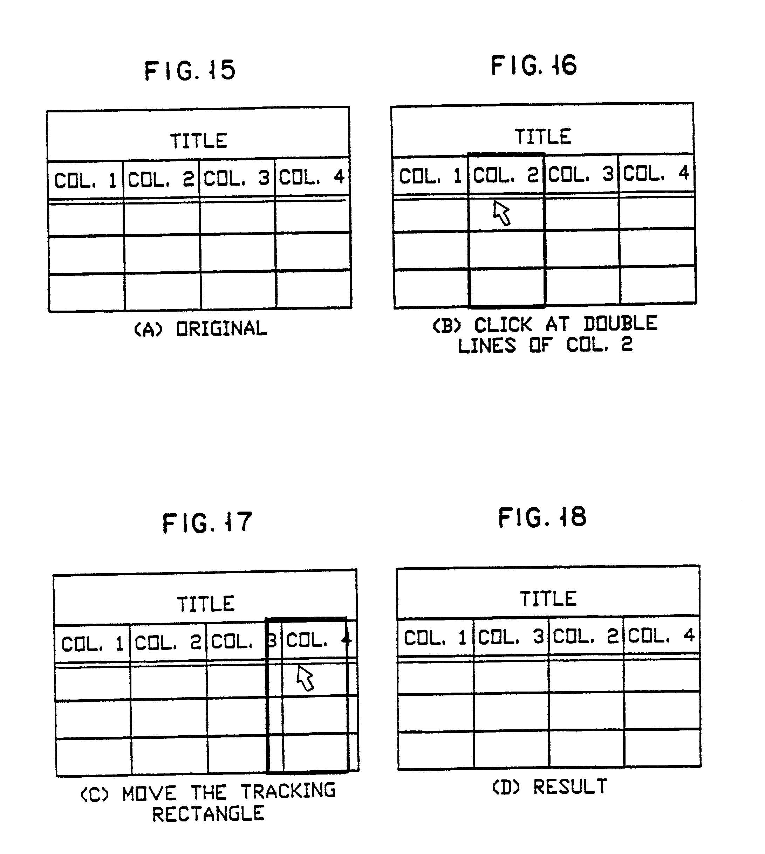

2. Move the mouse while holding the button until the tracking rectangle sits between column 3 and column 4, as shown in Fig. 17.

3. Release the mouse button, column 2 and column 3 will be switched, as shown in Fig. 18.

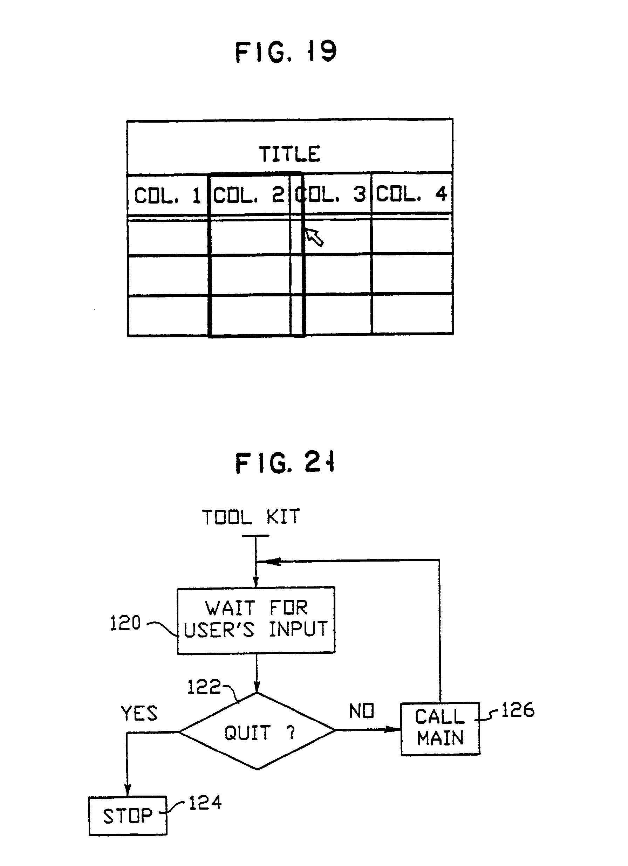

The resizing of columns is as follows. The size of a column can be changed by clicking a mouse button at the right border of that column and hold down the button, a tracking rectangle of the whole column will be displayed. Then one can move the mouse and the tracking rectangle will be resized accordingly, as shown in Fig. 19. After the mouse button is released, the size of the column will be changed, so as the size of the whole table. However, the column width can not be smaller than the minimum size which allows all the text contents in that column to be fully drawn.

Adding and deleting is as follows. A new column can be added by double clicking (clicking twice very quickly) at the vertical column line where it is to be inserted. A tracking rectangle will be displayed when the mouse is moved. A new column will be inserted when the mouse button is released, and the whole table will be resized accordingly.

An empty column can be deleted by changing its size to zero.

Adding and deleting rows can be done similarly.

Creating forms from scanned-in paper form images is as follows. Other than creating forms from scratch, one can also use the toolkit to create electronic forms from images of existing paper forms being scanned in. The scanned images are treated as bitmaps in the toolkit and can be served as backgrounds of the electronic forms to be created.

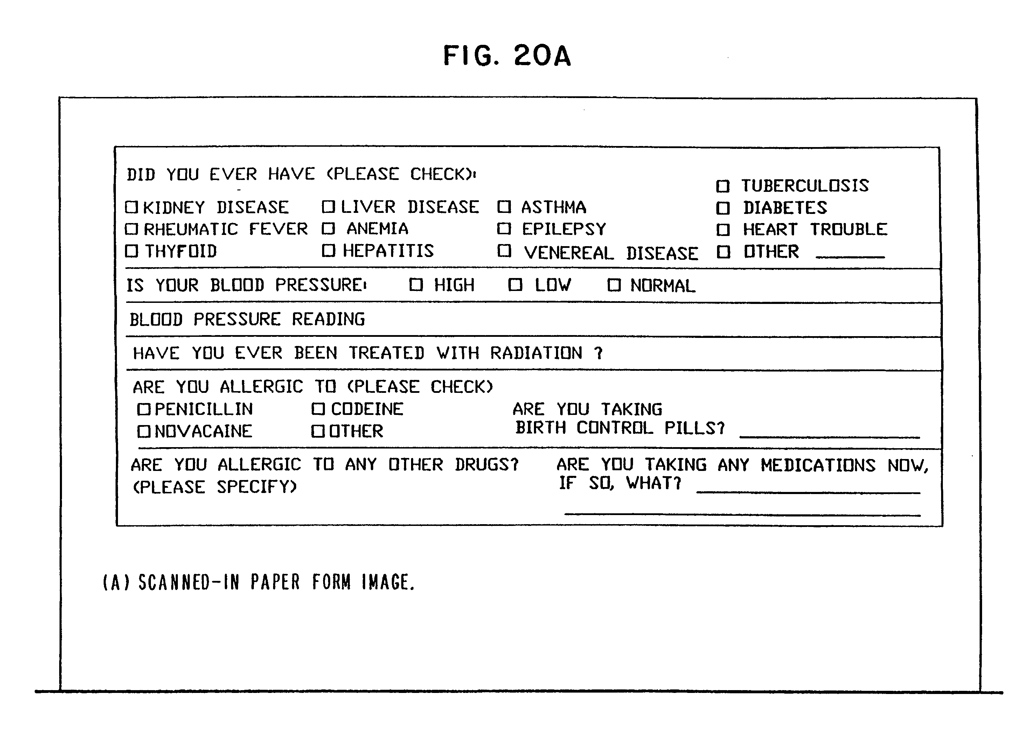

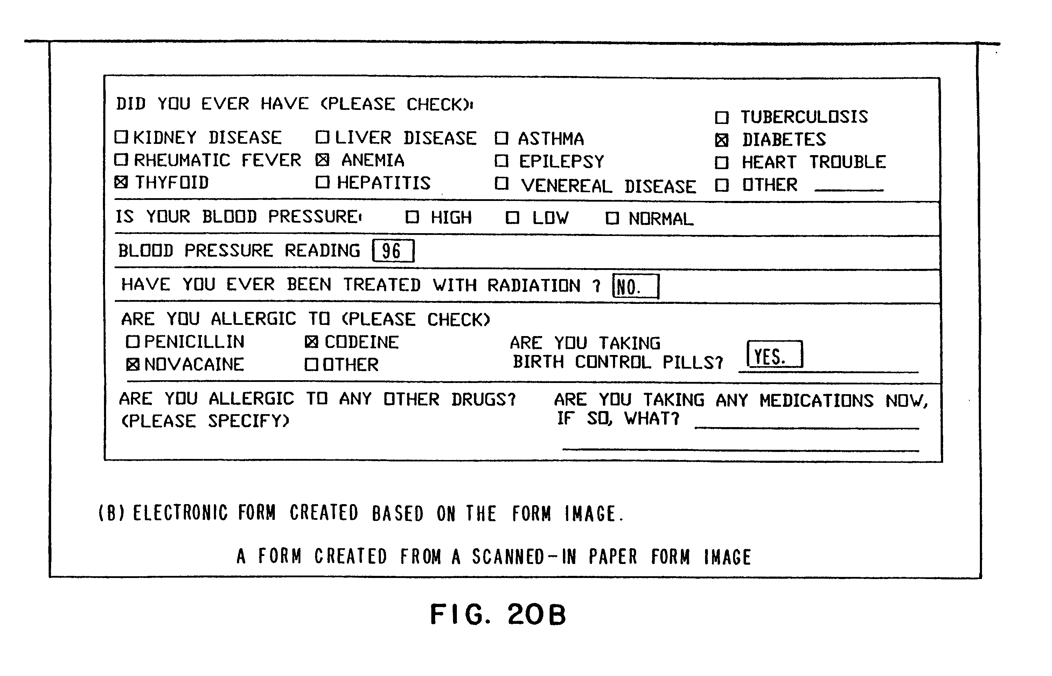

A scanned paper form image may appear almost the same as the one that created from scratch; however, many of the fields such as checkboxes and entry fields are still in their familiar image-like formats and need to be converted to active fields so that a user can check or fill data in. This can be achieved by creating those fields and superimposing them on top of the scanned image. On the other hand, those fixed fields such as descriptive texts, lines, and bitmaps contained in the paper form image can stay as they are, and this may save a lot of creation time. Fig. 20 is an example of a paper form scanned in and the electronic one which is created based on the form image.

It should be noted that, as shown in Fig. 20, due to noise and resolution problems introduced by the scanning process, a form created from scanned paper form image may not appear as good as the one generated completely from scratch. However, from the application point of view, it is sometimes desirable to retain the familiar paper form image in the electronic form.

The detailed operation of the toolkit will now be explained relative to functional flow charts.

As shown in Fig. 21, the toolkit is a message based system that waits for user's inputs at block 120 and dispatches the input to subroutines for execution. In response to a user's input there is a determination at decision block 122 if the input is to quit. If so, a stop is made at block 124. If not, the main subroutine is called as indicated at block 126. Thereafter, the toolkit loops until a command to quit is received at decision block 122.

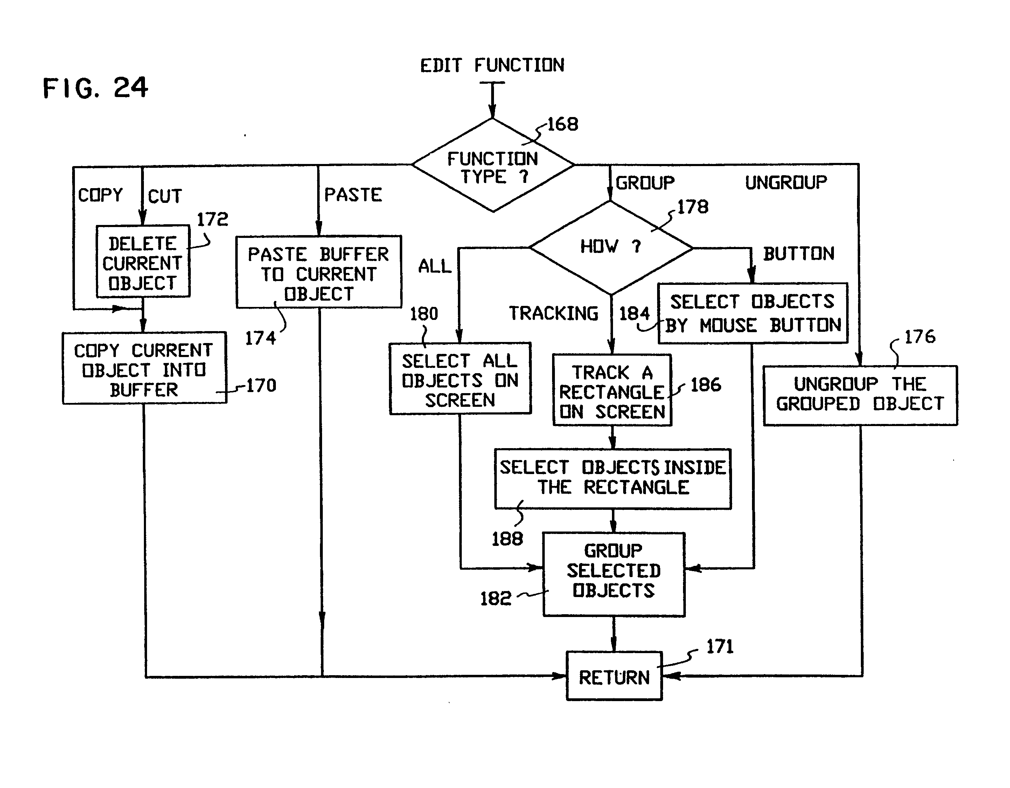

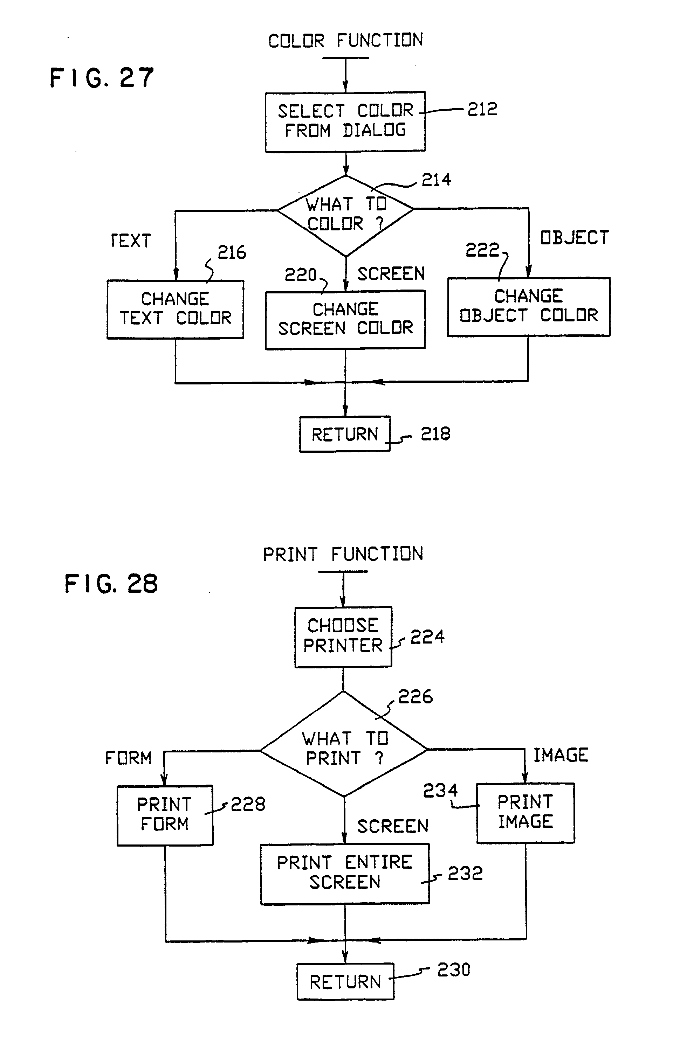

The flow chart of the main subroutine called for at block 126 of Fig. 21 is illustrated in Fig. 22. A determination is made at decision block 128 whether a menu is called for or a mouse button selection. If a menu is called for at block 130, one of the following menu items, previously explained at 88 of Fig. 6, is called for: Create, detailed flow chart Fig. 23; Edit, detailed flow chart Fig. 24; Arrange, detailed flow chart Fig. 25; Load/Save, detailed flow chart Fig. 26; Color, detailed flow chart Fig. 27; and Print, detailed flow chart Fig. 28. Following completion of the selection of the menu item there is a return at 132.

If the type of input of decision block 128 is a mouse button input, the object clicked at by the mouse is selected at 134. A determination is then made at decision block 136 whether the user mode or designer mode is active.

If the designer mode is active, a determination is made at decision block 138 which mouse button was pressed. If the left mouse button was pressed, a determination is then made at decision block 140 if the left button was double clicked. If so, object attributes are edited in detail at block 142. If not, an object pointed at by the mouse is dragged across the screen, as illustrated in Fig. 10 (Moving an object).

If at decision block 136 a determination is made that this is a user mode, or a determination is made at decision block 138 that the right mouse button was clicked, a determination is then made at decision block 146 as to the object type. If an entry field, a call entry at block 148, the details of which are shown in Fig. 29, is made. If a table, a call table, the details of which are shown in Fig. 31, is made in block 150. If a checkbox, a reverse checking status is made at block 152. If the object type is not one of the above or another go to return 132.

The details of the create function, which is shown generally at 130 of Fig. 22, is shown in Fig. 23. The object type is determined at decision block 154. If a table, the table with default size is created at block 156 and a return is made at 158. If a line or an arrow, a line is tracked on the screen at block 160 and the object is created at block 162 and a return is made at 158. If a barcode or a text, the text or code is input at block 164 and the object is created at block 162 and a return is made at 158. If an entry field, a circle, an ellipse, a rectangle, a triangle, a bitmap or a checkbox, a rectangle is tracked on the screen at block 166, as illustrated in Figs. 7 to 9, and the object is created at block 162 and a return is made at 158.

The details of the edit function, which is shown generally at 130 of Fig. 22, is shown in Fig. 24. The function type is determined at decision block 168. If a copy, the current object is copied into a buffer at block 170, and a return is made at block 171. If a cut, the current object is deleted at block 172, and the current object is copied into the buffer at block 170 and a return is made at block 171. If a paste, the buffer is pasted to the current object at block 174 and a return is made at block 171. If an ungroup, the grouped object is ungrouped at block 176 and a return is made at block 171. If a group, a determination is made at decision block 178 relative to how the functions are grouped. If all, all objects on the screen are selected at block 180, and the selected objects are grouped at block 182 and a return is made at block 171. If a tracking, a rectangle is tracked on the screen at the block 186. Objects inside the rectangle are then selected at block 188, grouped at block 182 and a return is made at block 171. If a button, the mouse button selects the objects at block 184, groups the selected objects at block 182 and a return is made at block 171.

The details of the arrange function, which is shown generally at block 130 of Fig. 22, is shown in Fig. 25. The function type is determined at decision block 190. If a resize, the mouse button is dragged to resize the object at block 192 as illustrated in Fig. 12 and a return is made at block 194. If a rotate, the mouse button is clicked to set the rotation center at block 196. The mouse button is then dragged to rotate the object, as illustrated in Fig. 11, and a return is made at 194.

The details of the load/save function which is shown generally at block 130 of Fig. 22, is shown in Fig. 26. A determination of whether or not a form or an image is to be loaded/saved is made at decision block 200. If a form, an input filename is made at the block 202. A load/save form template is then made at block 204. A determination is made at decision block 206 if this is a user mode. If not, a return is made at block 208. If so, the filled data is loaded or saved at block 210 and a return is made at block 208. If an image, an input filename is made at the block 212. A load/save image is then made at block 214 and a return is made at block 208.

The details of the color function, which is shown generally in block 130 of Fig. 22, is shown in Fig. 27. A color is selected from the dialog, as illustrated in 92 of Fig. 6, at block 212. A determination is then made at decision block 214 relative to what to color. If text, the text color is changed at block 216 and a return is made at 218. If a screen, the screen color is changed at 220 and a return is made at 218. If an object, the object color is changed at block 222 and a return is made at 218.

The details of the print function, which is shown generally in block 130 of Fig. 22, is shown in Fig. 28. A printer is chosen at block 224, and a determination of what to print is made in decision block 226. If a form, the form is printed at block 228 and a return is made at the block 230. If a screen, the entire screen is printed at block 232 and a return is made at block 230. If an image, the image is printed at block 234 and a return is made at block 230.

The details of the call entry block 148 of Fig. 22 is shown in Fig. 29. The entry field is activated at block 236, and the user's input is waited for at block 238. The input type is then determined at decision block 240. If a keyboard input, the ENTRYKEY function is called at block 242, as detailed in Fig. 30. A determination is then made at decision block 244 whether or not to quit. If yes, a return is made at block 246. If no, a loop is made to block 238 to proceed as previously explained.

If the input at decision block 240 is from a mouse button, a determination is made at decision block 248 whether it is the right or left button. If the right button, a loop is made to block 238 to proceed as previously explained. If the left button, a determination is made relative to where the button clicked. If inside the entry field, the cursor is moved to where clicked and a loop is made to block 238 to proceed as previously explained. If outside the entry field, the entry field is deactivated at block 254 and a return is made at block 256.

The details of the call ENTRYKEY block 242 of Fig. 29 are shown in Fig. 30. A determination is made at decision block 258 relative to which key is pressed. If the tab key is pressed, a determination is made at decision block 260 relative to whether or not the contents are legal. If no, a return is made at block 262. If yes, the formula, if any, is computed at block 264, and the computation results are updated at block 266. The currently activated entry field is then deactivated at block 268 and a quit status is set at block 270 and a return is made at block 272. The flow will then loop back to the decision block 244 in Fig. 29, as described earlier. In this case, the quit status is set, therefore a return will be made at 246 in Fig. 29.

If the delete key is pressed, the character, denoted as CH, at the cursor is deleted at block 274 and a determination is made if this is the first line at decision block 276. If this is the first line a return is made at 272. If this is not the first line, then the first word in the next line is noted as W, as indicated in block 278. A determination is then made in decision block 280 if this W can fit in this line. If not, a return is made to block 272. If it will fit, W is moved up to this line in block 282 and the following lines are rearranged in block 284 and loops to block 276 to proceed as previously explained.

If the non-virtual key, denoted as CH, is pressed, a determination is made if the line is full at decision block 286. If the line is not full, CH is inserted at the cursor at block 288 and a return is made at 272. If the line is full, a new line is created at block 290. The new line is inserted below the old line at block 292, and the last word from the old line is moved to the new line in block 294. A determination is made whether the cursor is in the word at decision block 296. If yes, the cursor is moved too in block 298 and CH is inserted at the cursor at block 288. If the cursor is not in the word, CH is also inserted at the cursor at block 288 and a return is made to block 272.

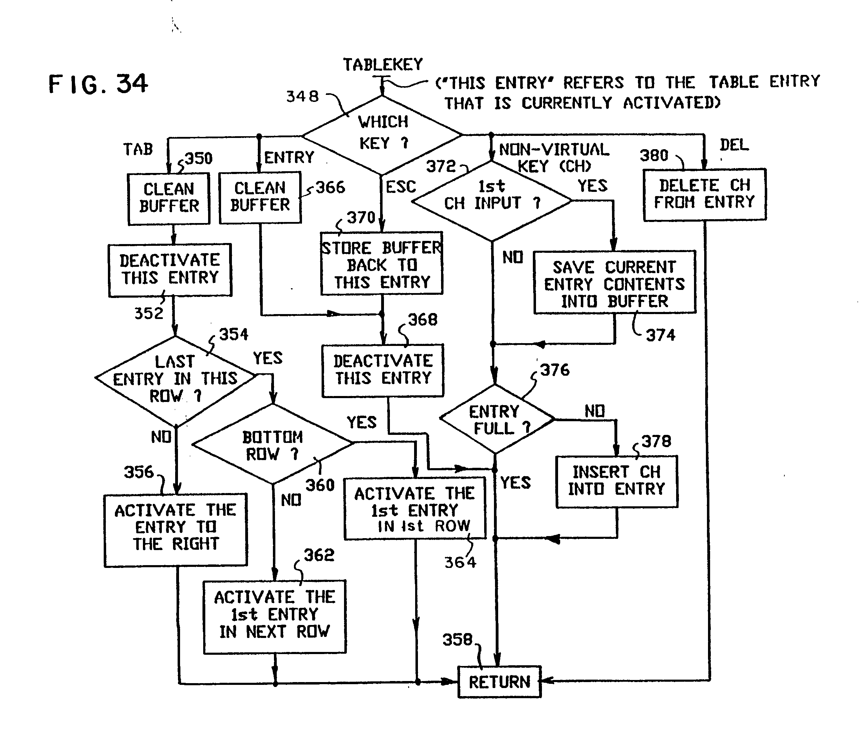

The call TABLE block 150 of Fig. 22 is shown in detail in Fig. 31. The table is activated at block 300 and a user's input is waited for at block 302. The type of input is determined at decision block 304. If there is a keyboard input, there is a determination if any entry is activated at decision block 306. If there is an activated entry, the TABLEKEY is called at block 308, the details of which are set forth in Fig. 34. There is then a loop back to block 302, as is also the case if there is a determination at decision block 306 that there is no activated entry.

If the determination at decision block 304 is that there is a mouse button entry, a determination of which mouse button was pressed is made at decision block 310. If the right button was pressed, there is a loop back to decision block 301. If the left button was pressed, a determination is then made at decision block 312 relative to where the button is clicked. If the button is clicked inside the table, the TABUTTON is called at block 314, the details of which are shown in Fig. 32, and there is a loopback to block 302. If the button is clicked outside the table, the table is deactivated at block 316 and a return is made at block 318.

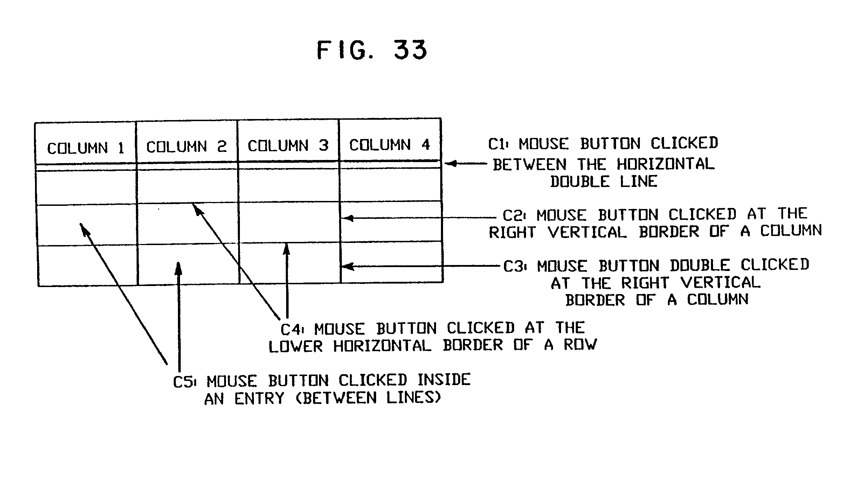

The TABUTTON block 314 of Fig. 31 is shown in detail in Fig. 32, which is explained below in conjunction with Fig. 33. This is directed to changing table column order which was generally discussed relative to Fig. 15 to 18. The condition, C1, C2, C3, C4 or C5 of where a mouse button is clicked on the table is tested at decision block 320. This is best seen in Fig. 33. If the mouse button is clicked between the horizontal double line, this is condition C1. If the mouse button is clicked at the right vertical border of a column, this is condition C2. If the mouse button is double clicked at the right vertical border of a column this is condition C3. If the mouse button is clicked at the lower horizontal border of a row this is condition C4. If the mouse button is clicked inside an entry, that is between lines, this is condition C5.

Returning to Fig. 32, if condition C1 exists, the column is moved in response to dragging the mouse in block 322 and the columns are rearranged accordingly in block 324 with a return then being made at block 326.

If condition C2 exists, the mouse is dragged to resize the column in block 328 and a determination in decision block 330 if the column's size is zero. If the column size is zero, the column is deleted in block 332 and the table is resized in block 334. The table is also resized in response to the size of the column not being zero as determined in decision block 330. This was previously discussed relative to Fig. 19.

If condition C3 exists the mouse is dragged to the position where a new column is to be inserted in block 336, and the table is resized at block 334 with a return at block 326.

If condition C4 exists the mouse is dragged in block 338 and a determination is made in decision block 340 whether the mouse movement was up or down. If the movement was down rows are added at block 342, and if the movement was up rows are deleted at block 344. The table is then resized at block 334 and a return is made at block 326.

If condition C5 exists the entry is activated at block 346 and a return is made at block 326.

The call TABLEKEY block 308 of Fig. 31 is shown in detail in Fig. 34. This determines which key entry is made from the keyboard at decision block 348. If the tab button is pressed, the buffer is cleaned at block 350 and the entry is deactivated at block 352. A determination is made at decision block 354 if this is the last entry in this row. If it is not, the entry to the right is activated in block 356 and a return is made at block 358. If it is the last entry in this row, a determination is made at decision block 360 if if is the bottom row. If it is not the bottom row, the first entry in the next row is activated in block 362 and a return is made at block 358. If this is the bottom row, the first entry in the first row is activated and a return is made at block 358.

If the enter key is pressed, the buffer is cleaned at block 366 and the entry is deactivated at block 368 and a return is made at block 358.

If the escape key is pressed, the buffer is stored back to this entry at block 370 and the entry is deactivated at block 368 and a return is made at block 358.

If a non-virtual key, denoted as CH, is pressed, a determination is made at decision block 372 whether this is the first CH input. If it is, the current entry is saved in a buffer at block 374 and a determination is made at decision block 376 whether or not the entry is full. If not full, CH is inserted into the entry at block 378 and a return is made at block 358.

If the delete (DEL) key is pressed, CH is deleted from the entry and a return is made at block 358.

In summary, a toolkit has been implemented which provides an easily usable environment for electronic form design and form filling. The toolkit has the following major capabilities that make electronic forms more advantageous than conventional paper forms, and still yet complementary to the existing paper form processing environment:

1. With the capability of loading in scanned-in forms and creating data entry fields, it allows people to convert paper forms painlessly to electronic forms by retaining the familiar form image and converting only the essential data.

2. It provides a program-free environment in which the designer/user can implement his/her new applications, or modify his/her old applications, by just using a mouse and keyboard.

3. It provides strong editing capabilities for fields including validation checking and automatic computation.

4. The designer/user can immediately see results on screen and make a modification interactively.

By separating the application dependent and independent parts, the toolkit also provides a clean programming environment for people to develop other applications with minimal effort.

One can keep the application independent part and rewrite the application dependent part to satisfy the new application, which in general can save as much as 80% of the work.

## Claims

1. In a toolkit for authoring forms (70) by a user, the combination comprising:

   a display device (14), including a screen (12);

   a processor (2);

   an input device (4, 6) for providing commands from said user to said processor (2) to produce information on the screen (12) of said display device (14);

   means for creating a plurality of objects on said screen (12) in response to user inputs by said input device (4, 6), said objects being utilized to produce a form (70) on the screen (12) of said display device (14); and

   means for moving said objects on the screen (12) of said display device (14) in the creation of said form (70).

2. The combination claimed in claim 1, including:

   means (154) for determining the object type to be created.

3. The combination claimed in claim 2, wherein said object types include a table (78) and a plurality of geometric shapes (52, 54, 56, 58).

4. The combination claimed in claim 3, including:

   means (156) for creating a table (78) with a default size; and

   means (166) for creating an object from said plurality of geometric shapes (52, 54, 56, 58).

5. The combination claimed in claim 3, wherein said object types further include an arrow, a line (58), a barcode (76), a checkbox (64) and text (60, 68).

6. The combination claimed in claim 5, including:

means (160, 164) for creating an object from the arrow, the line (58), the barcode (76), the checkbox (64) or the text (60, 68).

7. The combination claimed in claim 3, including:

means (130) for editing the object types created on the screen (12) of said display device (14).

8. The combination claimed in claim 3, including:

means (130) for resizing or rotating the object types created on the screen (12) of said display device (14).

9. The combination claimed in claim 3, including:

means (130) for loading or saving the form (70) created from the object types.

10. The combination claimed in claim 3, including:

means (130) for changing the color of the object types created.

11. The combination claimed in claim 3, including:

a printer (15); and

means (20) for printing the form (70) created by said object types on said printer (15).

12. The combination claimed in claim 3, wherein said table (78) is comprised of rows and columns, including:

means (322) for moving columns;

means (328) for resizing columns;

means (326) for inserting a new column; and

means (332) for deleting columns.

13. The combination claimed on claim 12, including:

means (342) for adding rows; and

means (344) for deleting rows.

14. The combination claimed in claim 5, including:

means (242) for reformatting text.

15. In apparatus for creating forms, the combination comprising:

a display device (14), including a screen (12);

a processor (2);

an input device (4, 6) for providing commands to said processor (2) to produce indicia on the screen (12) of said display device (14);

means for producing a menu (88) of a plurality of functions, including a create function, on the screen (12) of said display device (14) in response to the provision of a predetermined command from said input device (4, 6);

means for selecting said create function from said menu (88) in response to a predetermined command from said input device (4, 6), said create function including a list of object types that can be utilized to create a form on the screen (12) of said display device (14), said object types including a table (78) formed of rows and columns, and a plurality of geometric shapes (52, 54, 56, 58);

means (154) for selecting a table (78) or a geometric shape (52, 54, 56, 58) from said list of object types by said input device (4, 6);

means (156) for creating a table (78) with a default size if a table (78) is the selected object type;

means (166) for creating an object if a geometric shape (52, 54, 56, 58) is the selected object type; and

means for producing a form on the screen of said display device comprised of the selected ones of said table (78) and said geometric shapes (52, 54, 56, 58).

16. The combination claimed in claim 15, including:

means for moving the selected object type to different locations on the screen (12) of said display device (14); and

means for resizing (192) and rotating (198) the selected object type on the screen (12) of said display device (14).

17. The combination claimed in claim 15, wherein said selected object type is a table (78), including:

means for moving (322) and resizing (328) columns in said table (78);

means for deleting (332) columns and inserting (336) new columns in said table (78); and

means for adding (342) and deleting (344) rows in said table (78).

18. The combination claimed in claim 15, wherein said list of object types further include an arrow, a line (58), a barcode (76) and text (60, 68);

means (154) for selecting from said list of object types an arrow, a line (58), a barcode (76) or text (60, 68) by said input device (4, 6);

means (162) for producing a form on the screen of said display device comprised of one of the selected ones of said arrow, line (58), barcode (76) or text (60, 68).

19. The combination claimed in claim 18, wherein text (68) is one of the selcted object types, including:

means (242) for editing and reformatting said text (68).

20. A form authoring toolkit having a designer mode (46) for permitting a designer to create on-screen forms (70) and a user mode (48) for permitting a user to fill information in the created on-screen form (70), the combination comprising:

a display device (14), including a screen (12) on which the on-screen forms (70) can be created and filled;

a processor (2);

an input device (4, 6) to provide commands to said processor (2) for producing information on the screen (12) of said display device (14);

said designer mode (46) including:

means (130) for producing a plurality of objects on said screen (12), said objects including a table (78) formed of rows and columns, and geometric shapes (52, 54, 56, 58) and checkboxes (64, 82) and text (60), in response to predetermined commands from said input device (4, 6) to said processor (2); and

means (130) for producing said on-screen form (70) comprised of at least one of said table (78) and said geometric shapes (52, 54, 56, 58) and said checkboxes (64, 82) and said text (60);

said user mode (48) including:

means (148) for inserting text (68) in said on-screen form (70) in response to predetermined command from said input device (4, 6); and

means (152) for changing status in said checkboxes (64, 82).

21. A method for authoring forms (70) by a user, using an input device (4, 6) for providing commands to a processor (2) to produce information on the screen (12) of a display device (14), said method comprising the steps of:

creating (130) a plurality of objects on said screen (12) in response to user inputs by said input device (4, 6), said objects being utilized to produce a form on the screen (12) of said display device (14); and

moving said objects on the screen (12) of said display device (14) in the creation of said form (70).

22. The method claimed in claim 21, including the steps of:

determining (154) the object type to be created.

23. The method claimed in claim 22, wherein said object types include a table (78) and a plurality of geometric shapes (52, 54, 56, 58).

24. The method claimed in claim 23, including the steps of:

creating a table (78) with a default size; and

creating an object from said plurality of geometric shapes (52, 54, 56, 58).

25. The method of claim 23, including the steps of:

creating a checkbox (64, 82); and

changing (152) the status of said checkbox (64, 82).

26. The method claimed in claim 23, wherein said object types further include an arrow, a line (58), a barcode (76) and text (60).

27. The method claimed in claim 26, including the step of:

creating an object from the arrow, the line (58), the barcode (76) or the text (60, 68).

28. The method claimed in claim 23, including the step of:

editing (130) the object types created on the screen (12) of said display device (14).

29. The method claimed in claim 23, including the step of:

resizing (192) or rotating (198) the object types created on the screen (12) of said display device (14).

30. The method claimed in claim 23, including the step of:

loading or saving (204, 210, 214) the form (70) created from the object types.

31. The combination claimed in claim 23, including the step of:

changing (222) the color of the object types created.

32. The combination claimed in claim 23, including a printer (15) and the step of:

printing (228) the form (70) created by said object types on said printer (15).

33. The method claimed in claim 23, wherein said table (78) is comprised of rows and columns, including the steps of:

moving (322) columns;

resizing (328) columns;

inserting (336) a new column; and

deleting (332) columns.

34. The method claimed on claim 33, including the steps of:

adding rows (342); and

deleting (344) rows.

35. The method claimed in claim 26, including the step of:

reformatting (242) text (60, 68).

36. A method for creating forms, using an input device (4, 6) for providing commands to a processor (2) to produce indicia on the screen (12) of a display device (14), said method comprising the steps of:

producing a menu (88) of a plurality of functions, including a create function, on the screen (12) of said display device (14) in response to the provision of a predetermined command from said input device (4, 6);

selecting (130) said create function from said menu (88) in response to a predetermined command from said input device (4, 6), said create function including a list of object types that can be utilized to create a form (70) on the screen (12) of said display device (14), said object types including a table (78) formed of rows and columns, and a plurality of geometric shapes (52, 54, 56, 58);

selecting (154) a table (78) or a geometric shape (52, 54, 56, 58) from said list of object types by said input device (4, 6);

creating (156) a table with a default size if a table (78) is the selected object type;

creating (166) an object if a geometric shape (52, 54, 56, 58) is the selected object type; and

producing a form on the screen (12) of said display device (14) comprised of the selected ones of said table (78) and said geometric shapes (52, 54, 56, 58).

37. The method claimed in claim 36, including the steps of:

moving the selected object type to different locations on the screen (12) of said display device (14); and

resizing (192) and rotating (198) the selected object type on the screen (12) of said display device (14).

38. The method claimed in claim 36, wherein said selected object type is a table (78), including the steps of:

moving (322) and resizing (328) columns in said table (78);

deleting (332) columns and inserting (336) new columns in said table (78); and

adding (342) and deleting (344) rows in said table.

39. The method claimed in claim 36, wherein said list of object types further include an arrow, a line (58), a barcode (76), a checkbox (64, 78) and text (60, 68), including the steps of:

selecting from said list of object types an arrow, a line (58), a barcode (76), a checkbox (64, 78) or text (60) by said input device (4, 6);

producing a form (70) on the screen (12) of said display device (14) comprised of one of the selected ones of said arrow, line (52), barcode (76) or text (60).

40. The method claimed in claim 39, wherein text (60) is one of the selcted object types, including the step of:

editing and reformatting (242) said text (60).

41. A method of creating and filling forms (70), having a designer mode (46) for permitting a designer to create on-screen forms and a user mode (48) for permitting a user to fill information in the created on-screen form (70), using an input device (4, 6) to provide commands to a processor (2) for producing information on the screen (12) of a display device (14), comprising the following steps:

said designer mode (48) including the steps of:

producing a plurality of objects on said screen (12), said objects including a table (78) formed of rows and columns, and geometric shapes (52, 54, 56, 58) and checkboxes and text (60), in response to predetermined commands from said input device (4, 6) to said processor (2); and

producing said on-screen form (70) comprised of at least one of said table (78) and said geometric shapes (52, 54, 56, 58) and said checkboxes (64, 78) and said text (60);

said user mode (48) including the steps of:

inserting (242) text in said on-screen form (70) in response to predetermined command from said input device (4, 6); and

changing (152) status in said checkboxes (64, 78).

# F I G. 1

COMPUTER
2

14

12

4

6

10

8

PRINTER
15

FIG. 2

VALIDATION CHECK 28

AUTOMATIC COMPUTATION 30

PRINTING 20

FORM DESIGN 16

FORM FILLING (BY USER) 26

ROUTING 22

PROCESSING 24

FILING 18

DATABASE 32

BLANK FORM LIBRARY

USER PROFILE

FILLED PROFILE

→ PROCESS FLOW

⇒ DATA FLOW

FIG. 3

USER 44 48

FORM 42

USER MODE

DESIGNER 40

DESIGNER MODE 46

TOOLKIT 34

PM 36

OS/2 38

# FIG. 4

Designer Mode

Create   File   Edit   Arrange   Color   Fonts   Bmap   Help   Switch Mode   Debug

52

54

60

56

58

62

Bitmap

Graphic Objects

50

This is an entry field
You can type any
thing you want

68

64

Checkboxes

Entry field

EP 0 451 485 A2

# FIG. 5

## IBM Dental Plan

012345 678905

Claims should be submitted to:
Jenifer's Insurance Co.
P. O. Box 12345
Culver City, CA 90000

### 1. Employee Information

Name: Brian Jacob       Serial: 123456

Address: 123 Main Street, Apt #5
Mount Kisco, NY 12345

### 2. Patient Information

Name: Julie A. Jacob

☐ Self   ☒ Spouse   ☐ Child       82

### 3. Accident Information

Was the injured person at work when the accident occurred?   ☐ Yes   ☒ No

Date of Accident: [          ]

Description of Accident: [                    ]

### 4. Other Dental Coverage Information

Is this patient eligible for dental benefits under any plan provided to your spouse by another employer, government agency, worker's compensation, or other group?   ☐ Yes   ☒ No

Description of Other Coverage: [                    ]

Check if you wish payment sent to: ☒ You, or ☐ Dentist

| Employee's, retiree's, or surviving spouse's signature | Date |
|---|---|
|  |  |

70

### 5. Attending Dentist's Section

Name: Susan Smith       Telephone: 914-733-3224       S.S. or TIN No: 555-777-9999

Address: 456 Health Avenue, Suite C-400
White Plains, NY 10000       Specialty: Orthodontic

80

### 6. Examination and Treatment Record

| Tooth # | Surfaces | Services | Date | Fee |
|---|---|---|---|---|
| 1 |  | Clean | 12-01-89 | 450 |
| 2 |  | Clean | 12-01-89 | 450 |
| 3 |  | Clean | 01-20-90 | 500 |
|  |  |  |  |  |
|  |  |  |  |  |

78

Total fee charged: $ 1400

| Dentist's Signature | Date |
|---|---|
|  |  |

FIG. 6

IBM — YO 990 002

EP 0 451 485 A2

EP 0 451 485 A2

FIG. 7    FIG. 8    FIG. 9

(A) DRAG A RECTANGLE    (B) CREATED OBJECT (HIGHLIGHTED)    (C) CREATED OBJECT (UNHIGHLIGHTED)

114

112

FIG. 10

FIG. 11

22

# FIG. 12

# FIG. 13

| How are you doing today ? | How are you doin today ? |
|---|---|

Original entry field    After deleting the g in doing

Example of reformatting

# FIG. 14

E001
E002
E003

E004

E004

E001+E002+E003

OK    CANCEL

## FIG. 15

| TITLE | | | |
|---|---|---|---|
| COL. 1 | COL. 2 | COL. 3 | COL. 4 |
| | | | |
| | | | |
| | | | |

(A) ORIGINAL

## FIG. 16

| TITLE | | | |
|---|---|---|---|
| COL. 1 | COL. 2 | COL. 3 | COL. 4 |
| | | | |
| | | | |
| | | | |

(B) CLICK AT DOUBLE
LINES OF COL. 2

## FIG. 17

| TITLE | | | |
|---|---|---|---|
| COL. 1 | COL. 2 | COL. 3 | COL. 4 |
| | | | |
| | | | |
| | | | |

(C) MOVE THE TRACKING
RECTANGLE

## FIG. 18

| TITLE | | | |
|---|---|---|---|
| COL. 1 | COL. 3 | COL. 2 | COL. 4 |
| | | | |
| | | | |
| | | | |

(D) RESULT

## FIG. 19

## FIG. 21

# FIG. 20A

| | | | |
|---|---|---|---|
| DID YOU EVER HAVE (PLEASE CHECK): | | | □ TUBERCULOSIS |
| □ KIDNEY DISEASE | □ LIVER DISEASE | □ ASTHMA | □ DIABETES |
| □ RHEUMATIC FEVER | □ ANEMIA | □ EPILEPSY | □ HEART TROUBLE |
| □ THYFOID | □ HEPATITIS | □ VENEREAL DISEASE | □ OTHER _____ |

IS YOUR BLOOD PRESSURE:     □ HIGH     □ LOW     □ NORMAL

BLOOD PRESSURE READING

HAVE YOU EVER BEEN TREATED WITH RADIATION ?

ARE YOU ALLERGIC TO (PLEASE CHECK)
□ PENICILLIN        □ CODEINE          ARE YOU TAKING
□ NOVACAINE         □ OTHER            BIRTH CONTROL PILLS? _____

ARE YOU ALLERGIC TO ANY OTHER DRUGS?     ARE YOU TAKING ANY MEDICATIONS NOW,
(PLEASE SPECIFY)                          IF SO, WHAT? _____

(A) SCANNED-IN PAPER FORM IMAGE.

EP 0 451 485 A2

DID YOU EVER HAVE (PLEASE CHECK):

☐ KIDNEY DISEASE ☐ LIVER DISEASE ☐ ASTHMA ☐ TUBERCULOSIS

☐ RHEUMATIC FEVER ☒ ANEMIA ☐ EPILEPSY ☒ DIABETES

☒ THYFOID ☐ HEPATITIS ☐ VENEREAL DISEASE ☐ HEART TROUBLE

☐ OTHER _____

IS YOUR BLOOD PRESSURE: ☐ HIGH ☐ LOW ☐ NORMAL

BLOOD PRESSURE READING [ 96 ]

HAVE YOU EVER BEEN TREATED WITH RADIATION ? [NO.]

ARE YOU ALLERGIC TO (PLEASE CHECK)
☐ PENICILLIN ☒ CODEINE
☒ NOVACAINE ☐ OTHER

ARE YOU TAKING
BIRTH CONTROL PILLS? [YES.]

ARE YOU ALLERGIC TO ANY OTHER DRUGS? ARE YOU TAKING ANY MEDICATIONS NOW,
(PLEASE SPECIFY) IF SO, WHAT? _____

_____

(B) ELECTRONIC FORM CREATED BASED ON THE FORM IMAGE.

A FORM CREATED FROM A SCANNED-IN PAPER FORM IMAGE

# FIG. 20B

MAIN

TYPE ? 128

MENU

MOUSE BUTTON

SELECT OBJECT BEING
CLICKED BY THE MOUSE 134

FIG. 22

CALL
CORRESPONDING
FUNCTIONS: 130

CREATE
EDIT
ARRANGE
LOAD/SAVE
COLOR
PRINT

USER
MODE ? 136

YES

NO (DESIGNER MODE)

WHICH
BUTTON ? 138

RIGHT

LEFT

NONE OR
OTHERS

OBJECT
TYPE ? 146

TABLE

CHECKBOX

DOUBLE
CLICKED ? 140

NO

ENTRY
FIELD

CALL
TABLE 150

REVERSE
CHECKING
STATUS 152

YES

142

144

CALL
ENTRY 148

EDIT OBJECT
ATTRIBUTES
IN DETAIL

MOVE OBJECT
BY DRAGGING
THE MOUSE

RETURN 132

EP 0 451 485 A2

28

**FIG. 23**

CREATE FUNCTION

ENTRY FIELD
CIRCLE
ELLIPSE
RECTANGLE
TRIANGLE
BITMAP
CHECKBOX

OBJECT TYPE ? — 154

TABLE

CREATE TABLE WITH DEFAULT SIZE — 156

ARROW LINE

TRACK A LINE ON SCREEN — 160

BARCODE TEXT

INPUT TEXT OR CODE — 164

TRACK A RECTANGLE ON SCREEN — 166

CREATE THE OBJECT — 162

RETURN — 158

EP 0 451 485 A2

**FIG. 24**

EDIT FUNCTION

FUNCTION TYPE ? `168`

COPY / CUT / PASTE / GROUP / UNGROUP

DELETE CURRENT OBJECT `172`

PASTE BUFFER TO CURRENT OBJECT `174`

COPY CURRENT OBJECT INTO BUFFER `170`

HOW ? `178`

ALL / TRACKING `184` / BUTTON

SELECT OBJECTS BY MOUSE BUTTON

SELECT ALL OBJECTS ON SCREEN `180`

TRACK A RECTANGLE ON SCREEN `186`

UNGROUP THE GROUPED OBJECT `176`

SELECT OBJECTS INSIDE THE RECTANGLE `188`

GROUP SELECTED OBJECTS `182`

RETURN `171`

EP 0 451 485 A2

FIG. 25

ARRANGE FUNCTION

190 — FUNCTION TYPE ?

RESIZE

DRAG MOUSE BUTTON TO RESIZE OBJECT — 192

ROTATE

CLICK MOUSE BUTTON TO SET ROTATION CENTER — 196

DRAG MOUSE BUTTON TO ROTATE OBJECT — 198

RETURN — 194

FIG. 26

LOAD/SAVE FUNCTION

200 — FORM OR IMAGE ?

FORM

INPUT FILENAME — 202

LOAD/SAVE FORM TEMPLATE — 204

206 — USER MODE ?

NO

YES

210 — LOAD/SAVE FILLED DATA

IMAGE

212 — INPUT FILENAME

214 — LOAD/SAVE IMAGE

RETURN — 208

**FIG. 27**

COLOR FUNCTION

SELECT COLOR FROM DIALOG — 212

214

WHAT TO COLOR ?

TEXT

216

CHANGE TEXT COLOR

220 SCREEN

CHANGE SCREEN COLOR

OBJECT

222

CHANGE OBJECT COLOR

RETURN — 218

**FIG. 28**

PRINT FUNCTION

CHOOSE PRINTER — 224

226

WHAT TO PRINT ?

FORM

PRINT FORM — 228

SCREEN

PRINT ENTIRE SCREEN — 232

IMAGE

234

PRINT IMAGE

RETURN — 230

# FIG. 29

ENTRY

ACTIVATE THE
ENTRY FIELD ⌐236

WAIT FOR
USER'S INPUT ⌐238

⌐240
INPUT
TYPE ?

MOUSE
BUTTON

KEYBOARD

248⌐
WHICH
BUTTON ?

LEFT

RIGHT

CALL
ENTRYKEY ⌐242

250⌐
WHERE
BUTTON
CLICKED?

OUTSIDE
ENTRY FIELD

INSIDE
ENTRY FIELD

244⌐
QUIT ?

NO

DEACTIVATE
THE ENTRY ⌐254
FIELD

MOVE CURSOR
TO WHERE
CLICKED

252⌐

YES

246⌐ RETURN

RETURN ⌐256

# FIG. 30

ENTRYKEY ('EF' REFERS TO THE ENTRY FIELD THAT IS CURRENTLY ACTIVATED)

('THIS LINE' REFERS TO THE LINE CONTAINING THE CURSOR)

FIG. 31

TABLE

ACTIVATE THE TABLE — 300

WAIT FOR USER'S INPUT — 302

INPUT TYPE ? — 304

MOUSE BUTTON

KEYBOARD

WHICH BUTTON ? — 310

ANY ACTIVATED ENTRY ? — 306

NO

LEFT

RIGHT

WHERE BUTTON CLICKED? — 312

OUTSIDE THE TABLE

INSIDE THE TABLE

CALL TABUTTON — 314

YES

CALL TABLEKEY — 308

DEACTIVATE THE TABLE — 316

RETURN — 318

FIG. 32

EP 0 451 485 A2

# FIG. 33

| COLUMN 1 | COLUMN 2 | COLUMN 3 | COLUMN 4 |
|----------|----------|----------|----------|
|          |          |          |          |
|          |          |          |          |
|          |          |          |          |

C1ı MOUSE BUTTON CLICKED BETWEEN THE HORIZONTAL DOUBLE LINE

C2ı MOUSE BUTTON CLICKED AT THE RIGHT VERTICAL BORDER OF A COLUMN

C3ı MOUSE BUTTON DOUBLE CLICKED AT THE RIGHT VERTICAL BORDER OF A COLUMN

C4ı MOUSE BUTTON CLICKED AT THE LOWER HORIZONTAL BORDER OF A ROW

C5ı MOUSE BUTTON CLICKED INSIDE AN ENTRY (BETWEEN LINES)

# FIG. 34

TABLEKEY

("THIS ENTRY" REFERS TO THE TABLE ENTRY THAT IS CURRENTLY ACTIVATED)

348 — WHICH KEY ?

TAB

350 — CLEAN BUFFER

ENTRY

366 — CLEAN BUFFER

ESC

370 — STORE BUFFER BACK TO THIS ENTRY

NON-VIRTUAL KEY (CH)

372 — 1st CH INPUT ?

YES

NO

380 — DELETE CH FROM ENTRY

DEL

374 — SAVE CURRENT ENTRY CONTENTS INTO BUFFER

DEACTIVATE THIS ENTRY

352

354 — LAST ENTRY IN THIS ROW ?

YES

NO

368 — DEACTIVATE THIS ENTRY

YES

376 — ENTRY FULL ?

NO

378 — INSERT CH INTO ENTRY

356 — ACTIVATE THE ENTRY TO THE RIGHT

360 — BOTTOM ROW ?

NO

YES

364 — ACTIVATE THE 1st ENTRY IN 1st ROW

YES

362 — ACTIVATE THE 1st ENTRY IN NEXT ROW

358 — RETURN

EP 0 451 485 A2

38